(19) Europäisches Patentamt
European Patent Office
Office européen des brevets

(11) EP 2 488 464 B1

(12) **FASCICULE DE BREVET EUROPEEN**

(45) Date de publication et mention de la délivrance du brevet:
**16.11.2016 Bulletin 2016/46**

(21) Numéro de dépôt: **10784330.2**

(22) Date de dépôt: **12.10.2010**

(51) Int Cl.:
***C04B 24/38*** (2006.01) ***C04B 20/02*** (2006.01)
***C04B 24/26*** (2006.01) ***C04B 28/02*** (2006.01)
***C08L 95/00*** (2006.01)

(86) Numéro de dépôt international:
**PCT/FR2010/052160**

(87) Numéro de publication internationale:
**WO 2011/045528 (21.04.2011 Gazette 2011/16)**

(54) **PROCEDE D'INERTAGE D'IMPURETES**

VERFAHREN ZUR INERTISIERUNG VON UNREINHEITEN

METHOD FOR INERTING IMPURITIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2009 FR 0904923**

(43) Date de publication de la demande:
**22.08.2012 Bulletin 2012/34**

(73) Titulaire: **Lafarge**
**75116 Paris (FR)**

(72) Inventeurs:
- **HOANG, Lê-Chiên**
  **38300 Ruy-Montceau (FR)**
- **GHILARDI, Serge**
  **73420 Mery (FR)**

(74) Mandataire: **Regimbeau**
**20, rue de Chazelles**
**75847 Paris Cedex 17 (FR)**

(56) Documents cités:
**EP-A1- 0 471 597**
**EP-A1- 2 090 620**
**WO-A2-2006/032786**
**WO-A2-2009/052362**
**WO-A2-2010/040915**
**FR-A1- 2 875 496**
**GB-A- 508 929**
**JP-A- 2006 045 010**
**US-A- 5 731 259**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un procédé d'inertage d'impuretés nocives telles que les argiles des granulats dans des compositions hydrauliques cimentières ou hydrocarbonées bitumineuses.

Il est parfois difficile de maîtriser de façon constante les propriétés rhéologiques des compositions hydrauliques cimentières ou des propriétés d'adhésion entre un liant hydrocarboné et les granulats des compositions hydrocarbonées. La qualité des matières premières est souvent à l'origine de ces variations. En particulier, il a été constaté que les sables ou plus particulièrement les impuretés contenues dans les sables, telles que les argiles, peuvent générer des fluctuations de propriétés rhéologiques des compositions hydrauliques ou des propriétés d'adhésion entre un liant hydrocarboné et les granulats des compositions hydrocarbonées.

Pour les compositions hydrauliques, ces fluctuations peuvent être dues à une baisse de l'efficacité de superplastifiants de type polymère anionique à structure peigne, par exemple les polycarboxylate de polyoxyde d'alkylène (PCP).

Lors de la production de granulats, notamment de sables, il est connu d'éliminer les argiles et autres impuretés des granulats par lavage à l'eau. L'eau sale est ensuite traitée par un agent de floculation qui permet d'accélérer la séparation liquide-solide et de récupérer ainsi une eau propre. Cette eau est ensuite recyclée pour réaliser à nouveau un lavage des sables. Cette solution est cependant coûteuse en termes d'équipements et nécessite un apport d'eau important.

Une autre solution consiste à ne pas séparer les argiles des sables mais à inerter les argiles dans les sables. Le document WO2006032785 propose l'utilisation d'agents modifiant l'activité de l'argile, par exemple en diminuant sa capacité d'absorption ou en réalisant une pré-absorption. Le document WO2006032785 décrit notamment l'utilisation de polymères cationiques comprenant des groupes d'amines quaternaires. Toutefois l'utilisation des produits utilisés dans les exemples décrits dans ce document peut entraîner l'ajout d'une quantité importante de chlore dans la composition hydraulique. Ceci n'est pas souhaitable dans la mesure où les normes imposent généralement une quantité maximale de chlore dans les compositions hydrauliques (la norme NF EN 206-1 prévoit une quantité maximale de 1 % d'ions chlorure $Cl^-$ par rapport au ciment pour les bétons non armés et une quantité maximale de 0,1 % d'ions chlorure $Cl^-$ par rapport au ciment pour les bétons avec armature métallique) ou hydrocarbonées à cause de la propriété corrosive du chlore.

Le but de la présente invention est donc de proposer un procédé de préparation de compositions hydrauliques ou hydrocarbonées utile pour réduire les effets indésirables liés à la présence d'impuretés nocives telles que les argiles et qui permet de réduire l'introduction de chlore dans la composition hydraulique ou hydrocarbonée.

Ce but est atteint par l'utilisation de polymères cationiques spécifiques. Ainsi, l'invention vise principalement un procédé d'inertage d'impuretés, telles que des argiles, dans des granulats destinés à la préparation de compositions hydrauliques ou hydrocarbonées, comprenant une étape consistant à ajouter à la composition ou à l'un de ses constituants un polymère cationique correspondant à au moins un dérivé d'un polymère naturel ou d'origine naturelle choisi parmi le groupe comprenant la dextrine (notamment la dextrine jaune et la dextrine blanche) et le chitosan.

Avantageusement, les polymères cationiques selon l'invention peuvent être obtenus à partir de produits largement disponibles dans la nature.

L'invention offre comme autre avantage que le polymère cationique selon l'invention est soluble dans l'eau, ce qui en facilite l'utilisation.

L'invention offre comme autre avantage que l'efficacité d'inertage du polymère cationique selon l'invention est peu sensible à la nature de l'argile.

Un autre avantage de la présente invention est que le polymère cationique selon l'invention n'entraîne pas une augmentation de la viscosité de la composition hydraulique ou hydrocarbonée.

Un autre avantage de la présente invention est que le dosage du polymère cationique selon l'invention dans la composition hydraulique ou hydrocarbonée est réduit.

Enfin l'invention a pour avantage de pouvoir être mise en oeuvre dans l'industrie du bâtiment, l'industrie chimique (adjuvantiers), l'industrie cimentière, dans les marchés de la construction (bâtiment, génie civil, routes ou usine de préfabrication) ou dans les centrales à béton.

D'autres avantages et caractéristiques de l'invention apparaîtront clairement à la lecture de la description et des exemples donnés à titre purement illustratifs et non limitatifs qui vont suivre.

Dans la présente description, on entend par le terme « polymère » un composé comportant plus de deux unités monomériques, identiques ou différentes, présentant un ordre particulier ou non, linéaires et/ou ramifiés.

Par le terme « cationicité », on entend désigner la densité de charges positives portées par un composé.

Par l'expression « degré de substitution (DS) », on entend selon l'invention le nombre moyen de mole de groupe portant une ou plusieurs fonctions cationiques ( par exemple d'azote quaternaire) lié à une unité de glucose et/ou de glucosamine. La valeur du DS peut varier de 0 à 3.

Par l'expression « degré de polymérisation (DP) », on entend selon l'invention le nombre d'unités constitutives

(motifs de répétition) du polymère. De façon générale, un polymère comprend généralement plusieurs macromolécules pouvant avoir des degrés de polymérisation différents. Par l'expression « degré de polymérisation moyen en nombre (DPM) », on entend selon l'invention le rapport du nombre total d'unités constitutives (motifs de répétition) au nombre total de macromolécules.

Par le terme « composition hydraulique », on entend définir toute composition présentant une prise hydraulique, et tout particulièrement les mortiers et bétons destinés à l'ensemble des marchés de la construction (bâtiment, génie civil ou usine de préfabrication).

Par l'expression « liant hydraulique », on entend selon la présente invention un matériau pulvérulent qui, gâché avec de l'eau, forme une pâte qui fait prise et durcit par suite de réactions et de processus d'hydratation, et qui après durcissement, conserve sa résistance et sa stabilité même sous l'eau.

Par le terme « béton », on entend un mélange de liant hydraulique (par exemple du ciment), de granulats, d'eau, éventuellement d'additifs, et éventuellement d'additions minérales, comme par exemple le béton hautes performances, le béton très hautes performances, le béton autoplaçant, le béton autonivelant, le béton autocompactant, le béton fibré, le béton prêt à l'emploi ou le béton coloré. Par le terme « béton », on entend également les bétons ayant subi une opération de finition telle que le béton bouchardé, le béton désactivé ou lavé, ou le béton poli. On entend également selon cette définition le béton précontraint. Le terme « béton » comprend les mortiers. Dans ce cas précis, le béton comprend un mélange de liant hydraulique, de sable, d'eau et éventuellement d'additifs et éventuellement d'additions minérales. Le terme « béton » selon l'invention désigne indistinctement le béton frais ou le béton durci.

Par l'expression « composition hydrocarbonée » on entend selon la présente invention une composition comprenant au moins un liant hydrocarboné et des granulats, comme par exemple du béton bitumineux, des graves-bitumes, de l'asphalte, ou des enduits superficiels à base d'émulsion de bitume. Une composition hydrocarbonée selon l'invention peut en outre comprendre des additifs usuels, comme par exemple des dopes d'adhésivité ou des fibres (en verre, en cellulose ou en amiante, par exemple). Une composition hydrocarbonée selon l'invention peut en outre comprendre des matériaux recyclés, comme par exemple des bardeaux de toiture, du verre ou du béton.

Par l'expression « liant hydrocarboné » on entend selon la présente invention une substance composée d'un mélange d'hydrocarbures, très visqueuse voire solide à la température ambiante. Un liant hydrocarboné selon l'invention peut par exemple être du bitume naturel ou du bitume brut dérivé du pétrole (bitumes purs NF EN 12591, bitumes spéciaux de grade « dur » NF EN 13924, etc.).

Selon l'invention le terme « granulats » désigne des graviers, des gravillons et/ou du sable.

Par le terme « sable », on entend définir des granulats d'une taille granulométrique moyenne comprise de 0 à 6 mm, de préférence de 0 à 4 mm. Ils peuvent être de toute nature minérale, calcaire, siliceuse ou silico-calcaire ou autre. Cette définition englobe également des fillers ou d'autres matériaux inorganiques particulaires susceptibles d'être présents dans des compositions hydrauliques.

Par le terme « impuretés », on entend des impuretés susceptibles de dégrader des propriétés des compositions hydrauliques ou hydrocarbonées, notamment des propriétés rhéologiques des compositions hydrauliques ou des propriétés d'adhésion entre un liant hydrocarboné et les granulats des compositions hydrocarbonées. Il peut s'agir de composés ayant une capacité élevée d'absorption de molécules organiques. Il peut s'agir d'argiles présentes au niveau des granulats. Il peut également s'agir de fines, d'additions minérales, etc.

Par le terme « argiles », on entend des silicates d'aluminium et/ou de magnésium, notamment les phyllosilicates à structure en feuillets, typiquement espacés d'environ 7 à environ 14 Angströms. Ce terme vise toutefois aussi des argiles d'autres types, notamment les argiles amorphes, argiles gonflantes ou non gonflantes. Parmi les argiles rencontrées fréquemment dans les sables peuvent être mentionnées notamment la montmorillonite, l'illite, la kaolinite, la muscovite et la chlorite.

L'invention vise un procédé d'inertage d'impuretés dans des compositions hydrauliques ou hydrocarbonées, comprenant une étape consistant à ajouter à la composition ou à l'un de ses constituants un polymère cationique correspondant à au moins un dérivé d'un polymère naturel ou d'origine naturelle choisi parmi le groupe comprenant la dextrine et le chitosan.

Les inventeurs ont mis en évidence que plusieurs paramètres doivent être pris en compte pour obtenir un polymère cationique correspondant à au moins un dérivé d'un polymère naturel ou d'origine naturelle et adapté à inerter des impuretés dans des compositions hydrauliques ou hydrocarbonées. Parmi les paramètres mis en évidence par les inventeurs figurent le poids moléculaire ou la masse molaire du polymère cationique, la densité de charges cationique du polymère cationique et la ramification du polymère cationique.

De façon avantageuse, le taux moyen de charges cationiques par motif de répétition est supérieur à 0,1, de préférence supérieur à 0,5, encore plus préférentiellement supérieure à 0,7.

De façon avantageuse, le polymère cationique selon l'invention a un degré de polymérisation moyen en nombre compris de 4 à 3000, en particulier de 10 à 2000, de préférence de 50 à 500.

De façon avantageuse, le polymère cationique selon l'invention a une masse molaire inférieure à 500000 g/mol, de préférence inférieure à 100000 g/mol.

De façon avantageuse, le polymère cationique selon l'invention a une structure linéaire ou ramifiée.

En outre, les inventeurs ont mis en évidence que, de façon avantageuse, avec un polymère cationique correspondant à au moins un dérivé d'un polymère naturel ou d'origine naturelle choisi parmi le groupe comprenant la dextrine et le chitosan, l'utilisation du polymère est facilitée dans la mesure où le polymère cationique est soluble dans l'eau. De préférence, le polymère cationique à une solubilité supérieure à 70 % dans de l'eau à 20°C.

Les inventeurs ont mis en évidence qu'un inertage efficace des impuretés n'est pas obtenu avec tous les dérivés de polymère naturel ou d'origine naturelle. En particulier, les inventeurs ont mis en évidence qu'un inertage efficace des impuretés n'est pas obtenu en utilisant un polymère cationique correspondant à de l'amidon cationique. En effet, il n'est pas possible de produire de l'amidon cationique avec une quantité de charges suffisante pour obtenir l'inertage des impuretés des compositions hydrauliques ou hydrocarbonées. En outre, l'amidon n'est pas soluble dans l'eau à 25°C. De plus, l'ajout d'amidon à une composition hydraulique ou hydrocarbonée entraîne une augmentation de la viscosité de la composition hydraulique ou hydrocarbonée, ce qui n'est généralement pas souhaitable.

La dextrine et le chitosan sont des polysaccharides. Les polysaccharides sont des polymères formés de plusieurs oses (ou monosaccharides) ayant pour formule générale $-[C_x(H_2O)_y)]_n-$ où x est supérieur ou égal à 4, y est généralement égal à x-1 et n est supérieur ou égal à 2. On distingue deux catégories de polysaccharides : les homopolysaccharides constitués du même monosaccharide et les hétéropolysaccharides formés de différents monosaccharides.

L'amidon est un polysaccharide correspondant à un mélange de deux homopolymères, l'amylose et l'amylopectine, qui sont composés d'unités D-Anhydroglucopyranose (ou AGU, acronyme anglais pour Anhydroglucose Unit). Les unités AGU sont liées entre elles par des liaisons $\alpha$ (1-4) et des liaisons $\alpha$ (1-6), ces-dernières étant à l'origine de ramifications dans la structure de la molécule. Ces deux homopolymères diffèrent par leur degré de branchement et leur degré de polymérisation. L'amylose est un polysaccharide linéaire et représente de 17 à 30 % du mélange dans les branchement et leur degré de polymérisation. L'amylose est un polysaccharide linéaire et représente de 17 à 30 % du mélange dans les amidons ordinaires, plus de 50 % du mélange pour les amidons particuliers et moins de 1 % pour les amidons cireux. La masse molaire de l'amylose est généralement comprise de 40000 à 500000 g/mol voire davantage. Le degré de polymérisation moyen en nombre de l'amylose est compris de 300 à 3000 voire davantage. L'amylopectine est un polysaccharide ramifié avec de courtes branches toutes les 11 à 30 unités AGU par l'intermédiaire de liaisons $\alpha$ (1-6). L'amylopectine représente de 70 à 80 % du mélange dans les amidons ordinaires, moins de 50 % pour les amidons particuliers et plus de 99 % pour les amidons cireux. Sa masse molaire peut aller de 1000000 à 100000000 g/mol et son niveau de branchement est de l'ordre de 5 %. Le degré de polymérisation moyen en nombre de l'amylopectine est compris de 10000 à 100000.

Les dextrines sont obtenues par dessiccation ou hydrolyse acide de l'amidon. Le traitement thermique entraîne une hydrolyse partielle des liaisons $\alpha$(1-4) glycosidiques dans les premiers temps de la réaction suivie par une restructuration des molécules due à l'apparition de nouvelles liaisons glycosidiques $\alpha$(1-4), $\alpha$(1-6), $\beta$(1-2), $\beta$(1-6) de sorte que les unités D-Anhydroglucopyranose (AGU) peuvent être reliées ensemble par d'autres types de liaison que des liaisons $\alpha$ (1-4) et $\alpha$ (1-6). Les dextrines peuvent être obtenues par voie chimique ou enzymatique. Elles correspondent donc à un mélange de polymères ramifiés composés d'unités D-Anhydroglucopyranose (AGU). La masse molaire de la dextrine est généralement inférieure à 500000 g/mol. Le degré de polymérisation moyen en nombre de la dextrine est compris de 4 à 3000.

Le chitosan (ou la chitosane) est un polyoside composé de la distribution aléatoire de D-glucosamine (unité désacétylée) et de N-acétyl-D-glucosamine (unité acétylée) liées en ß-(1-4). Il peut être produit par désacétylation chimique (en milieu alcalin) ou enzymatique de la chitine.

De façon avantageuse, le polymère cationique selon l'invention est un polysaccharide cationique, de préférence un polysaccharide cationique ramifié.

Selon un exemple de réalisation de l'invention, le taux moyen de charges cationiques par unité de glucose du polysaccharide cationique est supérieur à 0,1, de préférence supérieur à 0,5, encore plus préférentiellement supérieur à 0,7.

De façon avantageuse, le polymère cationique selon l'invention est un polysaccharide cationique ayant un degré de polymérisation moyen en nombre compris de 4 à 3000, en particulier de 10 à 2000, de préférence de 30 à 300.

De façon avantageuse, le polymère cationique selon l'invention est un polysaccharide cationique ayant une masse molaire inférieure à 500000 g/mol, en particulier inférieur à 100000 g/mol, de préférence inférieure à 50000 g/mol.

De façon avantageuse, le polysaccharide cationique selon l'invention a une structure linéaire ou ramifiée, de préférence ramifiée avec les liaisons $\alpha$(1-3), $\alpha$(1-4), $\alpha$(1-6), $\beta$(1-2), $\beta$(1-6), etc. entre les unités de glucose.

De façon avantageuse, les polysaccharides cationiques considérés dans la présente invention sont dérivés de polysaccharides naturels. Les polysaccharides naturels sont, de façon avantageuse, biodégradables, biocompatibles et sont abondants dans la nature.

De façon avantageuse, le polymère cationique selon l'invention est une dextrine. Parmi les dextrines, on distingue notamment les dextrines blanches et dextrines jaunes qui de différencient par la plage de viscosité, la solubilité

dans l'eau froide, la couleur et le taux de sucre réducteur. Les dextrines jaunes ont généralement une masse molaire plus faible que les dextrines blanches.

De façon avantageuse, la dextrine selon l'invention a un taux de solubilité dans de l'eau à 20°C supérieur à 70 %, de préférence supérieur à 90 %, encore plus préférentiellement supérieur à 95 %.

De façon avantageuse, la dextrine selon l'invention a un taux de sucres réducteurs inférieurs à 20 %, de préférence inférieure à 10%, encore plus préférentiellement inférieure à 5 % (le taux de sucres réducteurs peut être mesuré selon la méthode de Fehling).

La masse molaire de la dextrine jaune est comprise de 500 g/mol à 50000 g/mol. Le degré de polymérisation moyen en nombre de la dextrine jaune est compris de 3 à 300. Le taux d'insolubilité inférieure à 10%, préférentiellement inférieure à 5 %. Le taux de sucre réducteur de la dextrine jaune est compris de 2 à 6 %.

La masse molaire de la dextrine blanche est comprise de 50000 g/mol à 500000 g/mol Le degré de polymérisation moyen en nombre de la dextrine blanche est compris de 300 à 3000. Le taux de sucre réducteur de la dextrine blanche est compris de 4 à 10 %.

Les dextrines jaune et blanche sont préparées par la dextrinisation (également appelée dextrinification) des amidons. Cette transformation comprend une étape d'hydrolyse et une étape de réassociation (condensation et transglucosidation) en formant de nouvelles liaisons entre des unités de glucose. Les dextrines jaunes peuvent être préparées par chauffage de l'amidon à des températures comprises de 135 à 180°C pendant 8 à 14 heures en présence d'acide comme catalyseur. Les dextrines blanches peuvent être préparées par chauffage d'amidon à des températures comprises de 120 à 130°C pendant 3 à 7 heures en présence d'un catalyseur acide. De façon avantageuse, le polymère cationique selon l'invention est une dextrine jaune.

De préférence, les polymères cationiques sont obtenus par modification post-synthétique du polymère naturel ou d'origine naturelle, par exemple par greffage de groupes portant une ou plusieurs fonctions cationiques sur le polymère naturel ou d'origine naturelle portant des groupes réactifs appropriés.

De préférence, l'opération de greffage peut comprendre :

- des réactions d'éthérification ;
- des réactions d'estérification ;
- des réactions de quaternisation ; et/ou
- des réactions d'oxydo-réduction et/ou d'amination réductrice.

De préférence, les polymères cationiques sont obtenus par modification post-synthétique d'un polysaccharide, par exemple par greffage de groupes portant une ou plusieurs fonctions cationiques sur une chaîne polymérique portant des groupes réactifs appropriés. De façon avantageuse, le polysaccharide cationique selon l'invention a un degré de substitution compris de 0,05 à 3, de préférence compris de 0,2 à 2,5, encore plus préférentiellement compris de 0,5 à 1,5, en particulier supérieur à 0,6, en particulier supérieur à 0,7.

De préférence, l'opération de greffage comprend des réactions d'éthérification ou d'estérification. Dans ce cas, les groupes portant une ou plusieurs fonctions cationiques peuvent être notamment des groupes phosphonium, pyridinium, sulfonium et amine quaternaire. De préférence, les groupes portant une ou plusieurs fonctions cationiques sont des groupes amine quaternaire. De préférence, le polymère cationique est un polysaccharide substitué par des groupes amine quaternaire.

La réaction du polymère naturel ou d'origine naturelle avec le composé amine quaternaire est généralement effectuée en présence d'une base et, de préférence, en milieu aqueux. Toutefois, d'autres solvants protiques ou aprotiques, par exemple des alcools, de préférence l'éthanol, le propanol ou l'isopropanol, ou des amides tels que le diméthylformamide (DMF), peuvent aussi être utilisés seuls ou en mélange avec de l'eau.

Les polysaccharides cationiques comprenant des groupes cationiques d'amine quaternaire sont particulièrement appropriés.

Selon un exemple de procédé de production du polymère cationique, on fait réagir un polysaccharide avec un composé amine quaternaire comprenant au moins un groupe adapté à réagir avec des groupes hydroxyles ou amines du polysaccharide pour fournir un polysaccharide avec un degré de substitution d'au moins 0,05.

La réaction de greffage avec le composé amine quaternaire peut être effectuée en une seule ou deux étapes ou en un plus grand nombre d'étapes avec ou sans étapes intermédiaires de séparation et de purification du produit. Dans chaque étape, la réaction est effectuée en mettant en contact le polysaccharide avec la base, de préférence en milieu aqueux.

La température de réaction pour chaque étape peut être de 15 à 120°C, de préférence de 20 à 100°C pour au moins certaines étapes, et la durée totale de la réaction globale peut être, par exemple, de 1 à 48 heures.

Selon un exemple de réalisation de l'invention, dans le cas où l'opération de greffage des groupes amine quaternaire sur le polymère naturel ou d'origine naturelle comprend des réactions d'éthérification, les groupes amine quaternaire peuvent être dérivés d'un composé amine quaternaire selon l'une des formules (1) ou (2) :

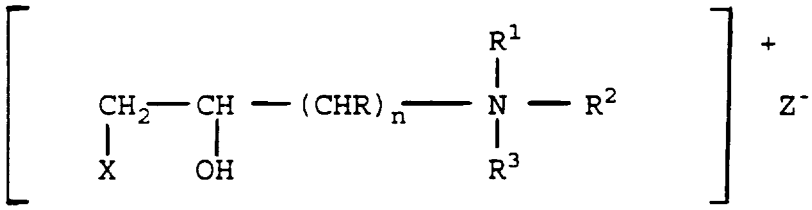

(1)

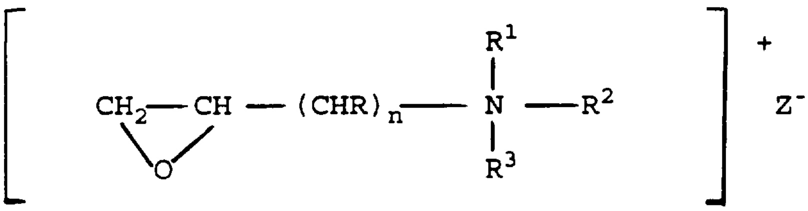

(2)

où n est un entier de 1 à 16 ;

X est un halogène, notamment le fluor, le chlore, le brome ou l'iode, de préférence le chlore ;

Z est un anion inorganique, par exemple un halogénure (le fluor, le chlore, le brome ou l'iode, de préférence le chlore), un nitrate, un nitrite, un phosphate, un sulfate ou un hydroxyde, ou un anion organique, par exemple un carboxylate tel qu'un acétate ou un propionate, l'anion étant de préférence non halogéné.

R, $R^1$, $R^2$ et $R^3$, qui peuvent être identiques ou différents, sont chacun l'hydrogène ou un radical organique, $R^2$ pouvant en outre être un groupe selon la formule (3) ou (4) :

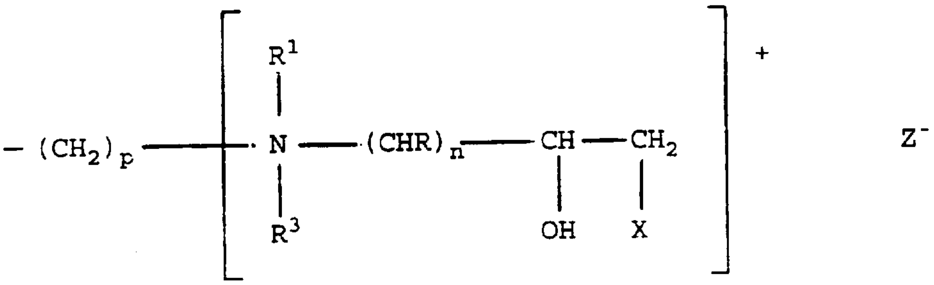

(3)

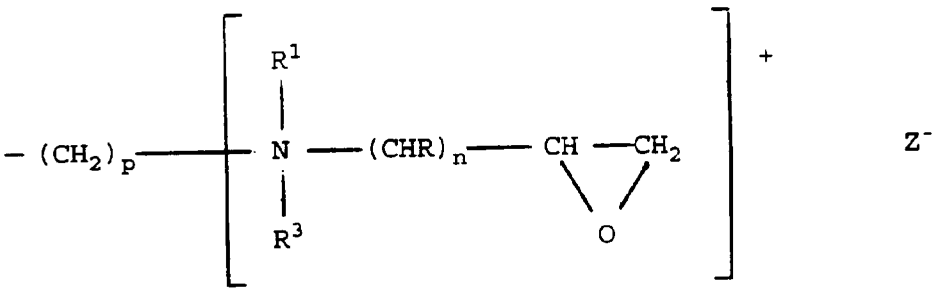

(4)

où p est un entier compris de 2 à 10 et n, R, $R^1$, $R^2$, $R^3$, X et Z sont tels que définis précédemment.

De préférence, R, $R^1$, $R^2$ et $R^3$ sont chacun l'hydrogène. Lorsqu'un de ces groupes est un radical organique, R, $R^1$, $R^2$ et $R^3$ sont chacun de façon avantageuse un groupe alkyle, hydroxyalkyle, alkényle ou aryle. Des groupes organiques importants augmentent le poids moléculaire du produit de sorte que des groupes plus petits sont préférés. De préférence, R, $R^1$, $R^2$ et $R^3$ sont chacun l'hydrogène ou un group alkyle, hydroxyalkyle, alkényle ou aryle comprenant jusqu'à 10 atomes de carbone. De façon avantageuse, le groupe organique est le méthyle ou l'hydroxyméthyle.

Selon un exemple de réalisation, le composé amine quaternaire est choisi parmi le groupe comprenant :

- le chlorure de 2,3-époxypropyl-N,N,N-triméthylammonium (commercialisé par Degussa A.G. sous la forme d'une solution aqueuse à 70 % sous l'appellation QUAB 151 ou commercialisé par Fluka sous la forme d'un composé solide sous le code produit 50045) ;

- le chlorure de 3-chloro-2-hydroxypropyl-N,N,N-triméthylammonium (commercialisé par Degussa A.G. sous la forme d'une solution aqueuse à 65% sous l'appellation QUAB 188 ou commercialisé par Dow Chemical Company sous la forme d'une solution aqueuse à 65 % sous l'appellation QUAT 188) ;
- le chlorure de 3-chloro-2-hydroxypropyl-N,N-diméthylammonium (commercialisé par Degussa A.G. sous la forme d'une solution aqueuse à 65 % sous l'appellation QUAB 218) ; et
- le dichlorure de 1,3-bis-(3-chloro-2-hydroxypropyl-N,N-diméthylammonium) N-propane (commercialisé par Degussa A.G. sous la forme d'une solution aqueuse à 65 % sous l'appellation QUAB 388).

Un composé amine quaternaire préféré est le chlorure de 2,3-époxypropyl-N,N,N-triméthylammonium.

Un polymère naturel ou d'origine naturelle greffé avec des groupes amine quaternaire dérivés d'un composé amine quaternaire selon l'une des formules (1) ou (2), pour lequel un ou plusieurs des groupes $R^1$, $R^2$ et $R^3$ est l'hydrogène, peut ensuite être converti en un composé pour lequel un ou plusieurs des groupes $R^1$, $R^2$ et $R^3$ est un groupe hydrocarboné issu d'une réaction de N-alkylation, par exemple, avec un composé de formule $R^5$Hal où $R^5$ est un groupe hydrocarboné éventuellement substitué, par exemple un alkyle, un hydroxyalkyle ou un alkényle et Hal est un halogène, plus particulièrement le fluor, le chlore, le brome ou l'iode, pour réaliser la quaternisation de tous les groupes amine.

Selon un exemple de réalisation d'une opération de greffage par éthérification, le procédé de production du polymère cationique comprend une première étape d'activation des fonctions hydroxyles du polysaccharide selon la réaction suivante (A) :

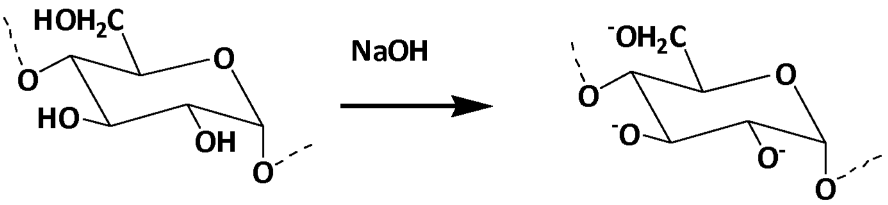

(A)

La première étape est de préférence réalisée en milieu basique. De façon avantageuse, elle est réalisée à température ambiante sous atmosphère neutre.

Selon le type du composé amine, le procédé de production du polymère cationique peut comprendre une deuxième étape correspondant à l'activation du composé amine par formation d'un époxyde selon la réaction (B) suivante :

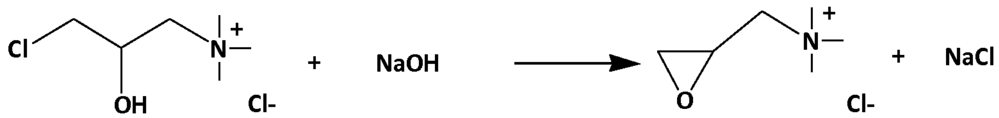

(B)

De façon avantageuse, la deuxième étape est réalisée à température ambiante sous atmosphère neutre.

Le procédé de production du polymère cationique peut comprendre une troisième étape correspondant à la réaction d'éthérification (C) suivante :

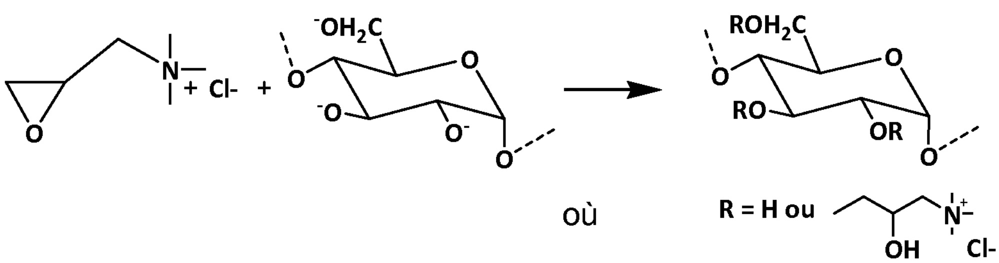

(C)

La troisième étape peut être mise en oeuvre en ajoutant en plusieurs fois, à température ambiante et sous atmosphère neutre, le composé époxyde obtenu à l'étape (B) au polysaccharide activé obtenu à l'étape (A). La température peut ensuite être augmentée pour favoriser la réaction (C).

La troisième étape peut être suivie par une quatrième étape de neutralisation qui comprend l'ajout d'un acide (minéral ou organique) au mélange issu de la réaction (C). De préférence, l'acide est l'acide acétique.

La quatrième étape peut être suivie par une cinquième étape de purification qui peut comprendre la précipitation

du polymère cationique en milieu alcool, l'ultrafiltration, la dialyse ou l'électrodialyse de la solution neutralisée.

Selon un exemple de réalisation de l'invention, dans le cas où l'opération de greffage des groupes amine quaternaire sur le polymère naturel ou d'origine naturelle comprend des réactions d'estérification, les groupes amine quaternaire peuvent être dérivés d'un composé amine quaternaire selon la formule (5) :

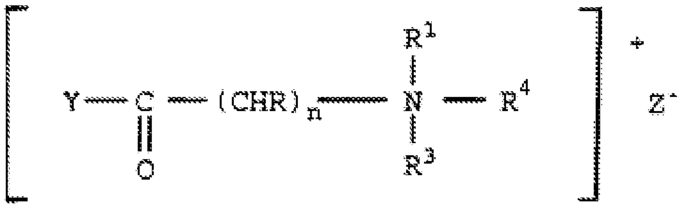

(5)

où Y est un halogène, notamment le fluor, le chlore, le brome ou l'iode, de préférence le chlore, OH, ou $O^-$ ,
n, Z, R, $R^1$, $R^3$ sont tels que définis précédemment,
$R^4$ peut être l'hydrogène, un radical organique ou un groupe selon la formule (6) :

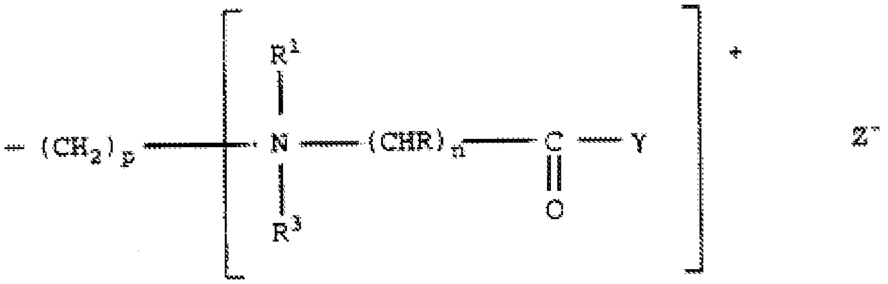

(6)

où p, R, $R^1$, $R^2$, $R^3$, Y et Z sont tels que définis précédemment.

Selon un exemple de réalisation, le composé amine quaternaire est choisi parmi le groupe comprenant :

- la bétaïne (triméthylglycine) ;
- le chlorure de bétaïnyle ; ou
- le chlorure de bétaïne.

Selon un exemple de réalisation d'une opération de greffage par estérification, le procédé de production d'un polysaccharide cationique comprend une réaction d'estérification selon la réaction suivante (D) :

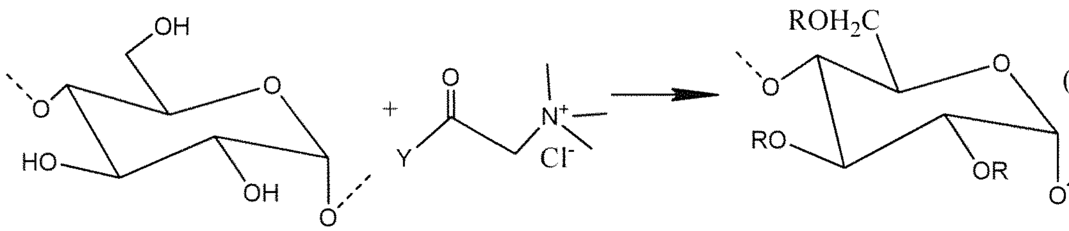

(D)

dans laquelle Y=OH, $O^-$ ou Cl et R=H ou

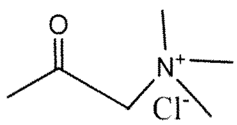

La réaction (D) peut être catalysée par un catalyseur chimique ou enzymatique.

Selon un autre exemple de procédé de production du polymère cationique, lorsque le polymère naturel ou d'origine naturelle comprend initialement des groupes amine, on peut réaliser directement une réaction de quaternisation

de tous les groupes amine du polymère naturel ou d'origine naturelle. Lorsque le polymère naturel ou d'origine naturelle est un polysaccharide, ce type de réaction peut notamment être mis en oeuvre lorsque le polysaccharide est le chitosan.

Selon un exemple de réalisation d'une opération de greffage d'un polysaccharide par quaternarisation, le procédé de production du polysaccharide cationique comprend une réaction de quaternarisation selon la réaction suivante (E) :

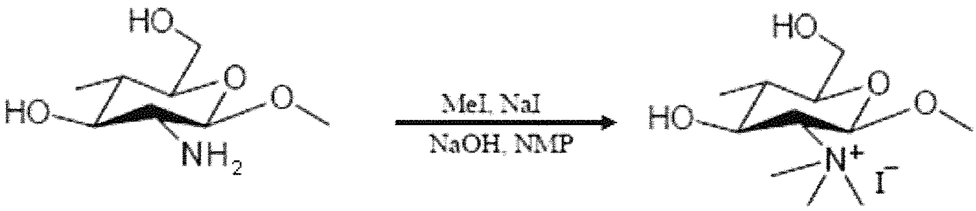

(E)

Cette réaction peut être réalisée en mettant en présence le polyglucosamine de l'iodure de méthyle (Mel), de l'iodure de sodium (Nal) et de l'hydroxyde de soude dans une solution de N-méthylpyrrolidone (NMP).

Selon un autre exemple de procédé de production du polymère cationique, on réalise des réactions d'oxydo-réduction et d'amination réductrice sur le polymère naturel ou d'origine naturelle. Selon un exemple de réalisation d'une opération de transformation d'un polysaccharide par réactions d'oxydo-réduction et d'amination réductrice, le procédé de production du polysaccharide cationique comprend une première réaction d'oxydoréduction correspondant à la réaction (F) suivante :

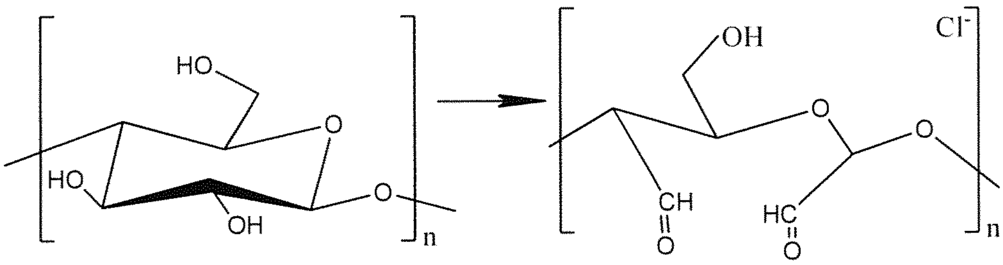
(F)

Le procédé de production du polymère cationique peut comprendre une deuxième étape correspondant à la réaction d'amination réductrice (G) suivante :

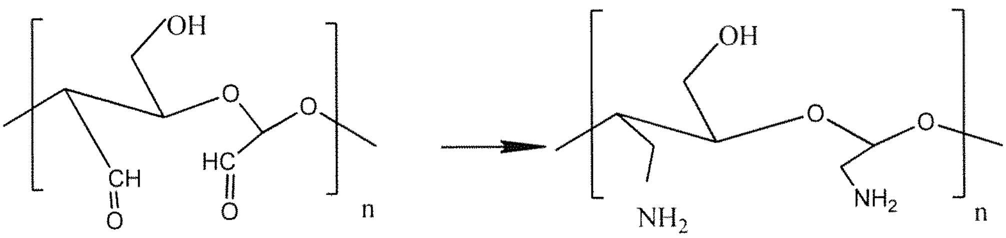
(G)

Le procédé de production du polymère cationique peut comprendre une troisième étape correspondant à la réaction de quaternisation (H) suivante :

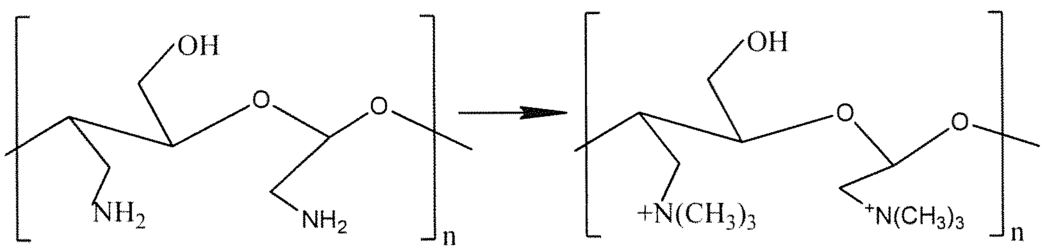
(H)

Dans le cas où le polymère cationique selon l'invention est associé à un ion halogénure, notamment l'ion chlorure, les exemples de procédé de production du polymère cationique décrits précédemment peuvent comprendre

une étape supplémentaire d'échange d'anions qui consiste à échanger au moins une partie des ions chlorure par des ions moins corrosifs. A titre d'échange, le polymère cationique selon l'invention peut, après traitement d'échange d'ions être associé à moins de 0,1 % d'ions halogénure.

Avantageusement, la composition hydraulique pour laquelle le polymère cationique est utilisé est un béton ou un mortier.

Le polymère cationique selon l'invention est particulièrement utile pour neutraliser les effets néfastes des impuretés contenues dans des compositions hydrauliques, notamment des argiles contenues dans certains sables. Il présente en outre au moins l'un des avantages suivants :

- il permet de réduire la quantité d'eau ou de fluidifiant (plastifiant ou superplastifiant) nécessaire à l'obtention d'une fluidité voulue ;
- il est efficace avec différentes argiles ;
- il ne perturbe pas les caractéristiques du mortier en cas de surdosage ;
- il ne perturbe pas les résistances mécaniques de la composition hydraulique, ni à court terme, ni à long terme ;
- il ne présente pas d'effet retardateur de prise ;
- il est stable dans le temps et résiste à la chaleur et au gel ;
- il entraîne l'introduction d'une quantité réduite d'un halogène, par exemple de chlore, dans la composition hydraulique.

Le polymère cationique selon l'invention est particulièrement utile pour neutraliser les effets néfastes des impuretés contenues dans des compositions hydrocarbonées. Il présente en outre au moins l'un des avantages suivants :

- il permet d'obtenir une composition hydrocarbonée ayant une tenue à l'eau améliorée, c'est-à-dire que l'adhésion liant hydrocarboné/granulats d'une composition hydrocarbonée selon l'invention après immersion dans l'eau ou exposition à l'humidité est meilleure que celle d'une composition hydrocarbonée ne comprenant pas le polymère cationique selon l'invention ;
- il permet de valoriser des granulats qui sont non-conformes par rapport aux normes concernant les granulats pour compositions hydrocarbonées (voir notamment les normes XP P 18545 chapitres 7 et 8, et NF EN 13043) et qu'il n'est par conséquent pas possible d'utiliser. Le procédé selon l'invention permet par exemple d'utiliser des granulats ayant une valeur au bleu de méthylène élevée, c'est-à-dire supérieure à 2 g, 2,5 g ou 3 g de bleu de méthylène par kilogramme de granulats en fonction de l'application visée ;
- il n'a pas d'influence négative sur les propriétés d'usage des compositions hydrocarbonées ;
- il évite une surconsommation d'eau par rapport au lavage des granulats classiquement utilisés.

Les polymères cationiques peuvent être utilisés selon l'application envisagée, sous forme de solides (granulé, bille), de liquides ou d'émulsions.

Le procédé décrit est utile pour les impuretés, notamment des argiles, présentes dans certains constituants des compositions visées. Ces impuretés peuvent affecter les propriétés des compositions.

Le traitement de matériaux contenant des argiles est particulièrement aisé et rapide. En effet, le polymère cationique selon l'invention présente une affinité importante avec les argiles. Ainsi, il suffit de mettre le polymère cationique en contact avec le matériau pour assurer un inertage des argiles contenues dans ceux-ci. Une mise en contact de quelques secondes est généralement suffisante.

Avantageusement, le polymère cationique est mis en contact avec le matériau par pulvérisation du polymère cationique en solution aqueuse.

Dans le cas d'un matériau particulaire, on mélange le matériau pendant ou après le traitement du matériau avec le polymère cationique afin d'assurer une bonne répartition du polymère cationique et obtenir un matériau traité de manière homogène.

Les argiles sont une source d'impuretés fréquente dans les sables. Aussi, selon un mode de réalisation de l'invention, le sable est traité avec le polymère cationique.

De préférence, le sable est mis en contact avec le polymère cationique par pulvérisation du produit en solution aqueuse sur le sable.

On traite de préférence le sable sec. Ainsi, le sable présente de préférence une humidité inférieure à 10 % en poids. Le traitement du sable a lieu préférentiellement en carrière.

Afin d'assurer une bonne répartition du polymère cationique et obtenir un sable traité de manière homogène, le sable est de préférence mélangé.

La pulvérisation peut avoir lieu dans un récipient, par exemple dans une caisse à chicanes à la sortie d'un tapis. Ce mode de réalisation assure en outre une faible perte du produit. En variante, il est envisageable de pulvériser une solution du polymère cationique dans un mélangeur placé en sortie de bande. Il peut également être envisagé de

préparer un pré-mélange d'une petite quantité de sable avec le produit puis d'ajouter ce pré-mélange au sable.

Le polymère cationique est de préférence appliqué sur le sable en une quantité appropriée pour assurer l'inertage complet des argiles présentes dans le sable et donc éviter le surdosage en superplastifiant.

Toutefois, un traitement partiel peut être envisagé et l'application en quantité supérieure ne détériore pas les propriétés recherchées de la composition hydraulique. Ainsi, il n'est pas nécessaire de doser au préalable la quantité d'argile présente dans le sable pour déterminer la quantité nécessaire en polymère cationique.

En effet, la quantité de polymère cationique nécessaire pour l'inertage dépend principalement de la teneur en argiles du sable. Elle peut également varier en fonction de la nature des argiles présentes. A titre indicatif, le traitement d'un sable est généralement satisfaisant avec un dosage de 2 à 20 %, de préférence 5 à 10 % en poids d'extrait sec de polymère cationique par rapport au poids en argile sèche dans le sable.

De préférence, le traitement d'un sable est généralement satisfaisant avec un dosage de 300 ppm à 10000 ppm, de préférence de 1000 ppm à 3000 ppm en masse sèche de polymère cationique par rapport à la masse de sable.

Le polymère cationique peut être ajouté à un ou plusieurs des constituants contenant les impuretés gênantes. Il peut également être ajouté au moment de la préparation de la composition hydraulique, par exemple dans l'eau de gâchage.

Le polymère cationique peut donc être ajouté aussi bien en carrière qu'en centrale à béton.

Le traitement direct des constituants, par exemple en carrière de sable, sera toutefois généralement plus efficace et de ce fait privilégié.

Les constituants ainsi traités peuvent être utilisés de manière habituelle, notamment pour la préparation de compositions à prise hydraulique. Ils sont utiles dans la préparation de compositions hydrauliques présentant des propriétés constantes.

En particulier, les sables ainsi traités sont utiles dans la préparation de compositions hydrauliques, dans lesquelles les argiles peuvent gêner l'efficacité des superplastifiants. Ils peuvent être utilisés de manière habituelle pour la préparation de compositions à prise hydraulique.

Les compositions hydrauliques comprenant des sables à teneur d'argile traités avec le polymère cationique selon l'invention présentent des propriétés rhéologiques comparables avec celles préparées avec des sables exempts d'argile ou celles préparées avec les polymères cationiques décrits dans la demande de brevet WO2006032785, sans surdosage en superplastifiant, et donc d'un coût inférieur.

Ce procédé permet donc de réduire la quantité d'eau ou de fluidifiant nécessaire à l'obtention d'une fluidité voulue.

En outre, le procédé décrit ne perturbe avantageusement pas les caractéristiques des compositions, même en cas de surdosage. En particulier, on n'observe pas d'effets d'entraînement d'air ou retardateur de prise. Par ailleurs, la mise en oeuvre du procédé décrit n'affecte pas les autres caractéristiques des compositions hydrauliques, comme l'ouvrabilité et son maintien dans le temps, les résistances mécaniques à court et long termes ou le temps de prise.

Le procédé décrit permet de traiter des constituants même fortement pollués. En effet, le polymère cationique décrit est efficace à un faible dosage, et rend ainsi l'inertage des argiles à l'échelle industrielle viable économiquement. Par ailleurs, le polymère cationique est stable dans le temps et résiste à la chaleur et au gel.

Enfin, le procédé ne nécessite pas la mise en place d'un appareillage particulier.

Il en résulte que le procédé décrit peut être efficace dans un large éventail de conditions, pour différents types de compositions hydrauliques et d'argiles.

L'invention sera décrite plus en détail au moyen des exemples suivants, donnés à titre non limitatif.

## EXEMPLES

La présente invention est illustrée par les exemples suivants non limitatifs. Dans les exemples, les matériaux utilisés sont disponibles auprès des fournisseurs suivants :

(1) Ciment : Lafarge France Le Havre.
(2) Sable ISO : Société Nouvelle de Littoral, France
(3) Sable siliceux Fulchiron PE2 LS : Fulchiron, France
(4) Filler Erbray : MEAC, France
(5) Superplasticizer Glenium 27 : Chryso, France
(6) Polymère cationique FL-2250 : SNF, France
(7) Dextrine jaune C*Plus 08011 : Cargill ou Dextrine jaune TACKIDEX® C172Y de Roquette
(8) QUAT188 : Dow Chemical Company
(9) Chitosan 652 : France Chitine
(10) Hydroxyéthylcellulose : Hercules (Natrosol 250 LR)
(11) GTMAC : Aldrich

Détermination du degré de substitution d'un polymère réalisé à base de dextrine par dosage de l'azote total

La détermination du degré de substitution DS d'un polymère par des groupes amine quaternaire est réalisée par la détermination du pourcentage d'azote du polymère par dosage de l'azote total.

Le dosage de l'azote est réalisé à l'aide d'un titrateur de carbone organique total (COT) couplé à un module azote (TN). Il est possible de doser la totalité de l'azote contenu dans un échantillon. En effet, après oxydation complète à 1050°C, les composés azotés libèrent en quantité stoechiométrique du monoxyde d'azote. Celui-ci, au contact d'ozone (généré par l'appareil), est transformé en dioxyde d'azote, composé instable, selon la réaction (I) suivante :

$$NO + O_3 \rightarrow NO2^* + O_2 \qquad (I)$$

Le retour à un état stable du dioxyde d'azote se fait avec émission de photons (proche de l'infra rouge), émission de lumière proportionnelle à la concentration en monoxyde d'azote, selon la réaction (J) suivante :

$$NO_2^* \rightarrow NO_2 + hv \qquad (J)$$

La lumière émise par chimioluminescence est alors mesurée par un photomultiplicateur puis un signal, observable sous la forme d'un pic, est obtenu.

Après avoir quantifié la quantité d'azote contenue dans l'échantillon, il est possible de déterminer le degré de substitution DS en considérant que lorsqu'un groupe issu d'un composé selon la formule (1) est greffé à un motif de répétition d'un homopolymère, la masse de l'ensemble obtenu correspond à la somme des masses du motif de répétition et du composé diminuée de la masse de l'élément Z et de la masse d'un atome d'hydrogène. On a donc la relation (K) suivante :

$$M_{Polysaccha\,ride_catio\,nique} = M_{UNIT} + DS \times (M_{QUAT} - M_{HZ}) \qquad (K)$$

où $M_{polysaccharide_cationique}$ est la masse molaire du polysaccharide cationique, $M_{UNIT}$ est la masse molaire du motif de répétition du polymère, $M_{QUAT}$ est la masse molaire du composé amine à partir duquel le groupe amine est obtenu, $M_{Hz}$ est la masse molaire du composé HZ. En appelant, en outre, $M_N$ la masse molaire de l'azote (14 g/mol) et $C_N$ la concentration massique (en %) d'azote dans la quantité totale du polysaccharide cationique, il vient :

$$C_N = \frac{M_N \times DS}{M_{Polysaccharide_catio\,nique}} \qquad (L)$$

On obtient finalement :

$$DS = \frac{M_{UNIT} \times C_N}{M_N - C_N (M_{QUAT} - M_{HZ})} \qquad (M)$$

Dans le cas où le composé amine est le QUAT 188, que l'élément Z est le chlore et que le polymère est la dextrine, la relation (M) devient :

$$DS = \frac{162 C_N}{14 - 152{,}5 \times C_N} \qquad (N)$$

Détermination du degré de substitution d'un polymère cationique, réalisé à base de chitosan par dosage du chlore

La teneur en chlore des polymères cationiques est déterminée par dosage potentiométrique. Les chlorures, présent en solution, sont précipités par l'ajout d'une solution de nitrate d'argent de volume connu puis la quantité de nitrate d'argent introduite en excès est dosée en retour par HCl. La teneur en chlore mesurée permet également de déterminer le degré de substitution.

Méthode de préparation d'un mortier

Le mortier est réalisé au moyen d'un malaxeur de type Perrier. L'ensemble de l'opération est réalisée à 20°C. La méthode de préparation comprend les étapes suivantes :

- Mettre les sables, comprenant éventuellement des argiles, dans un bol de malaxeur ;
- A T = 0 seconde : débuter le malaxage à petite vitesse (140 tours/min) et ajouter simultanément l'eau de mouillage en 30 secondes, puis continuer à malaxer à petite vitesse (140 tours/min) jusqu'à 60 secondes ;
- A T = 1 minute : arrêter le malaxage et laisser reposer pendant 4 minutes ;
- A T = 5 minutes (T0 pour la méthode de mesure du temps de prise) : ajouter le liant hydraulique ;
- A T = 6 minutes : malaxer à petite vitesse (140 tours/min) pendant 1 minute ;
- A T = 7 minutes : ajouter l'eau de gâchage en 30 secondes (tout en malaxant à petite vitesse (140 tours/min)) ; et
- A T = 7 minutes et 30 secondes : malaxer à grande vitesse (280 tours/min) pendant 2 minutes.

Formulation de mortier

La formulation de mortier suivante est utilisée pour réaliser les essais.

**Tableau 1 : Formulation de mortier**

| **Composant** | **Masse (g)** |
|---|---|
| Ciment | 480,4 |
| Sable ISO | 1350 |
| Sable siliceux | 200,1 |
| Filler calcaire | 354,1 |
| Argiles | 30 |
| Superplastifiant Glenium 27 | 0,81 |
| Eau totale<br>- dont eau de gâchée<br>- dont eau de mouillage des sables | 326,7<br>226,7<br>100 |

Le rapport Eau/Ciment est de 0,68. Le ciment est un ciment Portland de type CEM I 52,5 N.

Le sable ISO est un sable certifié CEN EN 196-1. Il s'agit d'un sable naturel siliceux, à grains arrondis, d'une teneur en silice au moins égale à 98 %. Sa composition granulométrique se situe dans les limites indiquées au Tableau 2.

**Tableau 2 - Composition granulométrique du sable ISO**

| Dimensions des mailles carrées (mm) | Refus cumulés sur les tamis (%) |
|---|---|
| 2,00 | 0 |
| 1,60 | 7 ± 5 |
| 1,00 | 33 ± 5 |
| 0,50 | 67 ± 5 |
| 0,16 | 87 ± 5 |
| 0,08 | 99 ± 1 |

Les additions d'argiles comprennent un tiers de kaolinite, un tiers d''illite et un tiers de montmorillonite. La quantité d'argiles correspond à 1,95 % en poids par rapport au poids des sables.

Méthode de mesure de l'étalement d'une composition hydraulique

Le principe de la mesure d'étalement consiste à remplir un tronc de cône de mesure d'étalement avec la composition hydraulique à tester puis à libérer ladite composition dudit tronc de cône de mesure d'étalement afin de

déterminer la surface du disque obtenu quand la composition hydraulique a fini de s'étaler. Le tronc de cône de mesure d'étalement correspond à une reproduction à l'échelle ½ du cône tel que défini par la norme NF P 18-451, 1981. Le tronc de cône de mesure d'étalement a les dimensions suivantes :

- diamètre de la base supérieure : 50 +/- 0,5 mm ;
- diamètre de la base inférieure : 100 +/- 0,5 mm ; et
- hauteur : 150 +/-0,5 mm.

L'ensemble de l'opération est réalisée à 20 °C. La mesure de l'étalement est réalisée de la façon suivante :

- Remplir le tronc de cône de référence en une seule fois avec la composition hydraulique à tester ;
- Piquer si besoin pour répartir la composition hydraulique de manière homogène dans le tronc de cône ;
- Araser la surface supérieure du cône ;
- Soulever le tronc de cône verticalement ; et
- Mesurer l'étalement selon quatre diamètres à 45° avec un pied à coulisse. Le résultat de la mesure d'étalement est la moyenne des quatre valeurs à +/- 1 mm.

Méthode de mesure de la viscosité d'une composition hydraulique

La mesure de la viscosité consiste à mesurer le temps d'écoulement de la composition hydraulique à tester au travers d'un tronc de cône de mesure de viscosité. Le tronc de cône de mesure de viscosité a les dimensions suivantes :

- diamètre de la base de plus grand diamètre : 150 mm ; et
- diamètre de la base de plus petit diamètre : 17 mm.

Le tronc de cône de mesure de viscosité comprend en outre des premier et second repères qui peuvent être des marques parallèles prévues sur les parois du tronc de cône et définissant des plans perpendiculaires à l'axe du tronc de cône. Le premier repère est plus proche de la base de plus grand diamètre que le deuxième repère. La distance entre les deux repères est de 60 mm, le premier repère se trouvant à 12 mm de la base de plus grand diamètre.

L'ensemble de l'opération est réalisée à 20 °C. La mesure de la viscosité d'une composition hydraulique est réalisée de la façon suivante :

- Orienter l'axe du tronc de cône selon la verticale, la base de plus petit diamètre étant orientée vers le bas et étant obturée par un bouchon ;
- Remplir le tronc de cône avec la composition hydraulique jusqu'au dessous du premier repère ;
- Piquer la composition hydraulique avec une spatule afin de s'assurer de l'absence de grosses bulles d'air ;
- Retirer le bouchon ;
- Déclencher le chronomètre lorsque le niveau de la composition hydraulique passe devant le premier repère ;
- Arrêter le chronomètre lorsque le niveau de la composition hydraulique passe devant le second repère ; et
- Noter la durée chronométrée qui est représentative de la viscosité de la composition hydraulique.

Méthode de mesure du temps de début de prise d'un mortier

Le mortier de béton (150 g) est mis dans un récipient plastique et disposé dans une enceinte semi-adiabatique. Une sonde de température est alors introduite au sein du mortier de béton pour la mesure de l'évolution de la température. La courbe d'évolution de la température mesurée en fonction du temps est mémorisée pendant 24 heures. Cette courbe comprend successivement une première portion où la température évolue, une deuxième portion où la température augmente, généralement de façon plus ou moins linéaire et une troisième portion où la température décroît. Le temps de début de prise correspond à l'instant pour lequel on a une inflexion de la courbe d'évolution entre les première et deuxième portions.

Dans les exemples qui vont suivre, la quantité de polymère cationique selon l'invention introduit dans un mortier est exprimée en pourcentage en poids de polymère par rapport aux poids d'argiles contenues dans le mortier.

**EXEMPLE DE REFENCE**

On prépare un mortier M1 ayant la formulation décrite précédemment.

On prépare un mortier M2 ayant la formulation décrite précédemment à la différence que le mortier M2 ne comprend pas d'argiles.

On utilise comme polymère REF le produit commercialisé par la société SNF sous l'appellation FL-2250. Il s'agit d'une polyamine issue de la condensation d'épichlorhydrine et de diméthylamine.
Le polymère REF a une cationicité de 7,27 meq/g et un taux de chlore de 26 %.
On prépare ensuite un mortier MREF comme cela est indiqué précédemment en ajoutant, avec l'eau de pré-mouillage, 10% en poids de polymère REF par rapport aux poids des argiles.
On mesure l'étalement, la viscosité et le temps de prise après préparation des mortiers M1, M2 et MREF comme cela a été décrit précédemment. Les résultats sont rassemblés dans les tableaux 3, 4 et 5 ci-après.

**Tableau 3 - Mesure de l'étalement du mortier**

| | | Etalement (mm) | | | | |
|---|---|---|---|---|---|---|
| Mortier | Inertant (%) | à 5 min | à 15 min | à 30 min | à 60 min | à 90 min |
| M1 | 0 | 100 | 100 | 100 | 100 | 100 |
| M2 | 0 | 325 | 300 | 287 | 270 | - |
| MREF | 10 | 300 | 297 | 290 | 270 | 225 |

**Tableau 4 - Viscosité**

| Mortier | Inertant (%) | Viscosité (s) à 5 min | Viscosité (s) à 30 min | Viscosité (s) à 60 min |
|---|---|---|---|---|
| M1 | 0 | - | - | - |
| M2 | 0 | 17 | 30 | 50 |
| MREF | 10 | 17 | 29 | 44 |

**Tableau 5 - Temps de prise**

| Mortier | Inertant (%) | Temps de prise (h/min) |
|---|---|---|
| M1 | 0 | 2h20 |
| M2 | 0 | 4h40 |
| MREF | 10 | 4h40 |

L'étalement du mortier M1 contenant des argiles et ne contenant pas d'inertant est plus faible que l'étalement du mortier M2 ne contenant pas d'argile. La viscosité du mortier M1 est trop importante et n'a pas pu être mesurée. Le temps de prise du mortier M1 est plus faible que le temps de prise du mortier M2.
L'étalement, la viscosité et le temps de prise du mortier de référence MREF contenant l'inertant de référence sont sensiblement du même ordre que ceux du mortier M2 ne contenant pas d'argile.

**<u>EXEMPLES 1 à 6</u>**

Pour les exemples 1 à 6, on a préparé des polymères cationiques, Dext1 à Dext6, à partir de la dextrine jaune **C*Plus 08011** comme suit.
De la dextrine jaune (33,8 g à 96 % d'extrait sec soit 0,2 mole d'AGU) et une quantité $Q_{WATER}$ d'eau ont été introduites dans un réacteur double enveloppe de 1 L, à température ambiante et sous agitation mécanique. Lorsque la dextrine a été parfaitement dissoute, une première quantité de soude à 50 % (48 g soit 0,6 mole) a été ajoutée puis le mélange a été laissé sous agitation mécanique pendant 1 heure sous atmosphère d'azote. On a introduit alors progressivement une quantité $Q_{QUAT188}$ du QUAT188 suivi par l'ajout d'une seconde quantité $Q_{NaOH}$ de soude à 50 %, ajout réalisé en 2 fois toute les 20 minutes. Cet ajout de soude terminé, le mélange réactionnel a été chauffé à 70°C et laissé sous atmosphère d'azote pendant 2 heures puis refroidi avant d'être neutralisé avec de l'acide adipique.
Pour les exemples 1 à 4, le produit obtenu a été ultra filtré sur membrane en polyéthersulfone de 5 kDa pour purification. N'ont été conservées que les molécules dont la masse moléculaire est supérieure à 5 kDa.
Pour chaque polymère cationiques Dext1 à Dext4, les quantités $Q_{WATER}$, $Q_{QUAT188}$ et $Q_{NaOH}$, le rendement massique, le taux de greffage (DS) des groupements cationiques obtenus par le dosage de l'azote sont indiqués dans

le tableau 6 ci-dessous :

**Tableau 6 : Dextrines cationiques à différents DS**

| Référence | Dext1 | Dext2 | Dext3 | Dext4 |
|---|---|---|---|---|
| $Q_{WATER}$ (g) | 187 | 235 | 224 | 235 |
| $Q_{QUAT188}$ (g) | 62,67 | 125,3 | 188 | 250,7 |
| $Q_{NaOH}$ (g) | 16 | 32 | 48 | 64,2 |
| Rendement massique de dextrine cationique (%) | 78 | 78 | 89 | 84 |
| Teneur en azote total (%) | 1,9 | 2,3 | 3,5 | 4,3 |
| DS | 0,27 | 0,35 | 0,65 | 0,92 |
| Teneur en chlore (%) | 2,3 | 3,6 | 7,0 | 9,8 |

Le polymère Dext5 a été obtenu avec le même procédé que celui décrit précédemment pour le polymère Dext4 (DS de 0,92) à la différence que l'étape de purification a été réalisée en utilisant une membrane en polyéthersulfone de 10 kDa. N'ont été conservées que les molécules dont la masse moléculaire est sensiblement supérieure à 10 kDa.

Le polymère Dext6 a été obtenu avec le même procédé que celui décrit précédemment pour le polymère Dext4 (DS de 0,92) à la différence que l'étape de purification a été réalisée en deux étapes. A une première étape, on a utilisé une membrane en polyéthersulfone de 10 kDa. N'ont alors été conservées que les molécules dont la masse moléculaire est sensiblement inférieure à 10 kDa. A une seconde étape, on a utilisé une membrane en polyéthersulfone de 5 kDa. N'ont alors été conservées que les molécules dont la masse moléculaire est sensiblement supérieure à 5 kDa. Suite aux deux étapes, n'ont alors été conservées que les molécules dont la masse moléculaire est sensiblement comprise entre 5 kDa et 10 kDa.

**EXEMPLE 1**

On a préparé un mortier MDext1 comme cela a été décrit précédemment, mais en ajoutant le polymère Dext1 (DS de 0,27) après l'eau de pré-mouillage dans les quantités indiquées dans les tableaux 7 et 8 ci-après.

On a mesuré l'étalement et le temps de prise après préparation des mortiers MDext1 et MREF comme cela a été décrit précédemment. Les résultats sont rassemblés dans les tableaux 7 et 8 ci-après.

**Tableau 7 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MDext1 | 10 | 185 | 170 | 165 | 170 | 170 | 115 |
| | 20 | 185 | 210 | 215 | 205 | 205 | 195 |
| MREF | 10 | 300 | 297 | 290 | 270 | 225 | - |

**Tableau 8 - Temps de prise**

| | Dosage (% d'argile) | Temps de prise (h/min) |
|---|---|---|
| MDext1 | 10 | 7h00 |
| MREF | 10 | 4h40 |

**EXEMPLE 2**

On a préparé un mortier MDext2 comme cela a été décrit précédemment, mais en ajoutant le polymère Dext2 (DS de 0,35) après l'eau de pré-mouillage, dans les quantités indiquées dans les tableaux 9, 10 et 11 ci-après.

On a mesuré l'étalement, la viscosité et le temps de prise après préparation des mortiers MDext2 et MREF comme cela a été décrit précédemment. Les résultats sont rassemblés dans les tableaux 9, 10 et 11 ci-après.

**Tableau 9 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MDext2 | 10 | 190 | 180 | 170 | - | - | - |
| | 15 | 190 | 210 | 200 | 195 | - | - |
| | 20 | 300 | 340 | 350 | 340 | 330 | 310 |
| | 30 | 410 | 410 | 405 | 395 | - | - |
| MREF | 10 | 300 | 297 | 290 | 270 | 225 | - |

**Tableau 10 - Viscosité**

| Mortier | Dosage (% d'argile) | Viscosité (s) à 5 min | Viscosité (s) à 15 min | Viscosité (s) à 30 min | Viscosité (s) à 60 min |
|---|---|---|---|---|---|
| MDext2 | 10 | > 50 | > 50 | > 50 | > 50 |
| | 15 | > 50 | > 50 | > 50 | > 50 |
| | 20 | 29 | 31 | - | 45 |
| | 30 | - | - | - | - |
| MREF | 10 | 17 | - | 29 | 44 |

**Tableau 11 - Temps de prise**

| Mortier | Dosage (% d'argile) | Temps de prise (h/min) |
|---|---|---|
| M Dext2 | 10 | 5h15 |
| | 20 | 38h00 |
| MREF | 10 | 4h40 |

Un dosage de 20 % de polymère cationique, calculé en poids de polymère sec par rapport au poids d'argile, permet d'atteindre un étalement supérieur à l'étalement du mortier de référence MREF.

## EXEMPLE 3

On a préparé un mortier MDext3 comme cela a été décrit précédemment, mais en ajoutant le polymère Dext3 (DS de 0,65) après l'eau de pré-mouillage dans des quantités indiquées dans les tableaux 12, 13 et 14 ci-après.

On a mesuré l'étalement, la viscosité et le temps de prise après préparation des mortiers comme cela a été décrit précédemment. Les résultats sont rassemblés dans les tableaux 12, 13 et 14 ci-après.

**Tableau 12 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MDext3 | 10 | 250 | 255 | 240 | 220 | 190 | 180 |
| | 12 | 320 | 335 | 325 | 300 | 280 | 255 |
| | 15 | 400 | 410 | 405 | 400 | 385 | - |
| MREF | 10 | 300 | 297 | 290 | 270 | 225 | - |

**Tableau 13 - Viscosité**

| Mortier | Dosage (% d'argile) | Viscosité (s) à 5 min | Viscosité (s) à 15 min | Viscosité (s) à 30 min | Viscosité (s) à 60 min |
|---|---|---|---|---|---|
| MDext3 | 10 | 37 | - | - | - |
| | 12 | 20 | 27 | - | 46 |
| | 15 | 19 | 27 | - | - |
| MREF | 10 | 17 | - | 29 | 44 |

**Tableau 14 - Temps de prise**

| | Dosage (% d'argile) | Temps de prise (h/min) |
|---|---|---|
| MDext3 | 10 | 6h10 |
| | 12 | 7h30 |
| | 15 | 11h08 |
| MREF | 10 | 4h40 |

Un dosage de 12 % de polymère cationique, calculé en poids de polymère sec par rapport au poids d'argile, permet d'atteindre un étalement supérieur à l'étalement du mortier de référence MREF.

**EXEMPLE 4**

On a préparé un mortier MDext4 comme cela a été décrit précédemment, mais en ajoutant le polymère Dext4 (DS de 0,92) après l'eau de pré-mouillage dans les quantités indiquées dans les tableaux 15, 16 et 17 ci-après.
On a mesuré l'étalement, la viscosité et le temps de prise après préparation des mortiers MDext4 et MREF comme cela a été décrit précédemment. Les résultats sont rassemblés dans les tableaux 15, 16 et 17 ci-après.

**Tableau 15 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MDext4 | 8 | 280 | 265 | 255 | 220 | 200 | 175 |
| | 9 | 320 | 315 | 305 | 275 | 255 | 220 |
| | 10 | 350 | 355 | 340 | 300 | 280 | 240 |
| MREF | 10 | 300 | 297 | 290 | 270 | 225 | - |

**Tableau 16 - Viscosité**

| Mortier | Dosage (% d'argile) | Viscosité (s) à 5 min | Viscosité (s) à 15 min | Viscosité (s) à 30 min | Viscosité (s) à 60 min |
|---|---|---|---|---|---|
| MDext4 | 8 | 24 | 46 | - | - |
| | 9 | 16 | 23 | - | 48 |
| | 10 | 18 | 26 | - | 54 |
| MREF | 10 | 17 | - | 29 | 44 |

**Tableau 17 - Temps de prise**

| Mortier | Dosage (% d'argile) | Temps de prise (h/min) |
|---|---|---|
| MDext4 | 8 | 5h00 |
| | 10 | 5h20 |
| MREF | 10 | 4h40 |

Un dosage de 9 % de polymère cationique, calculé en poids de polymère sec par rapport au poids d'argile, permet d'atteindre un étalement supérieur à l'étalement du mortier de référence MREF.

Les exemples 1 à 4 mettent en évidence que plus le degré de substitution du polymère à base de dextrine est faible, plus la quantité de polymère à introduire dans le mortier est importante pour obtenir un étalement similaire à l'étalement du mortier de référence MREF.

## EXEMPLE 5

On a préparé ensuite un mortier MDext5 comme cela a été décrit précédemment, mais en ajoutant le polymère Dext5 (DS de 0,92 et masse moléculaire supérieure à 10 kDa) après l'eau de pré-mouillage dans les quantités indiquées dans les tableaux 18, 19 et 20 ci-après.

On a mesuré l'étalement, la viscosité et le temps de prise après préparation des mortiers MDext5 et MREF comme cela a été décrit précédemment. Les résultats sont rassemblés dans les tableaux 18, 19 et 20 ci-après.

**Tableau 18 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MDext5 | 8 | 275 | 265 | 250 | 230 | 220 | 185 |
| | 10 | 390 | 392 | 380 | 350 | 320 | 285 |
| MREF | 10 | 300 | 297 | 290 | 270 | 225 | - |

**Tableau 19 - Viscosité**

| | | Viscosité (s) | | | |
|---|---|---|---|---|---|
| Mortier | Dosage (% d'argile) | Viscosité (s) à 5 min | Viscosité (s) à 30 min | Viscosité (s) à 60 min | Viscosité (s) à 90 min |
| MDext5 | 8 | 27 | 58 | - | - |
| | 10 | 17 | 22 | - | 36 |
| MREF | 10 | 17 | 29 | 44 | - |

**Tableau 20 - Temps de prise**

| Mortier | Dosage (% d'argile) | Temps de prise (h/min) |
|---|---|---|
| MDext5 | 10 | 7h30 |
| MREF | 10 | 4h40 |

A faibles dosages, 8 % ou 10 % de polymère cationique, calculé en poids de polymère sec par rapport au poids d'argile, un étalement proche de celui du mortier de référence MREF peut être obtenu.

## EXEMPLE 6

On a préparé ensuite un mortier MDext6 comme cela a été décrit précédemment, mais en ajoutant le polymère

Dext6 (DS de 0,92 et masse moléculaire comprise de 5 kDa à 10 kDa) après l'eau de pré-mouillage dans les quantités indiquées dans les tableaux 21, 22 et 23 ci-après.

On a mesuré l'étalement, la viscosité et le temps de prise après préparation des mortiers MDext6 et MREF comme cela a été décrit précédemment. Les résultats sont rassemblés dans les tableaux 21, 22 et 23 ci-après.

**Tableau 21 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MDext6 | 10 | 315 | 330 | 315 | 305 | 285 | 255 |
| MREF | 10 | 300 | 297 | 290 | 270 | 225 | - |

**Tableau 22 - Viscosité**

| | | Viscosité (s) | | | |
|---|---|---|---|---|---|
| Mortier | Dosage (% d'argile) | Viscosité (s) à 5 min | Viscosité (s) à 30 min | Viscosité (s) à 60 min | Viscosité (s) à 90 min |
| MDext6 | 10 | 19 | 26 | | 40 |
| MREF | 10 | 17 | 29 | 44 | - |

**Tableau 23 - Temps de prise**

| Mortier | Dosage (% d'argile) | Temps de prise (h/min) |
|---|---|---|
| MDext6 | 10 | 6h15 |
| MREF | 10 | 4h40 |

**<u>EXEMPLES 7 à 9</u>**

Pour les exemples 7 à 9, on a préparé des polymères cationiques, Chit1 à Chit3, à partir de chitosan comme suit.

Une quantité $Q_{CHIT}$ de chitosan, une quantité $Q_{WATER}$ d'eau et une quantité $Q_{QUAT188}$ à 65 % de QUAT188 ont été introduites dans un réacteur double enveloppe de 1 L, à température ambiante et sous agitation mécanique. Lorsque le chitosan a été parfaitement dispersé, une quantité $Q_{NaOH}$ de soude à 50 % (12 g soit 0,15 mole) a été ajoutée puis le mélange a été laissé sous agitation mécanique pendant 1 heure sous atmosphère d'azote. Le produit obtenu a été ultra filtré sur membrane en polyéthersulfone de 5 kDa pour purification. N'ont été conservées que les molécules dont la masse moléculaire est supérieure à 5 kDa.

Pour chaque polymère cationiques Chit1 à Chit3, les quantités $Q_{CHIT}$, $Q_{WATER}$, $Q_{QUAT188}$ et $Q_{NaOH}$, le rendement massique, le taux de greffage (DS) des groupements cationiques obtenus par le dosage du chlore sont indiqués dans le tableau 24 ci-dessous :

**Tableau 24**

| | Chit1 | Chit2 | Chit3 |
|---|---|---|---|
| $Q_{CHIT}$ (g) | 30 | 10 | 15 |
| $Q_{WATER}$ (g) | 25 | 235 | 150 |
| $Q_{QUAT188}$ (g) | 43,9 | 40,2 | 0 |
| $Q_{QUAT151}$ (g) | 0 | 0 | 50 |
| $Q_{NaOH}$ (g) | 12 | 22,6 | 0 |
| DS | 0,65 | 0,59 | 1,35 |
| Rendement massique (%) | 50 | 50 | 52 |

## EXEMPLE 7

On a préparé un mortier MChit1 comme cela a été décrit précédemment, mais en ajoutant le polymère Chit1 (DS de 0,65) dans l'eau de pré-mouillage dans les quantités indiquées dans les tableaux 25, 26 et 27 ci-après.

On a mesuré l'étalement, la viscosité et le temps de prise après préparation des mortiers MChit1 et MREF comme cela a été décrit précédemment. Les résultats sont rassemblés dans les tableaux 25, 26 et 27 ci-après.

**Tableau 25 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MChit1 | 6 | 315 | 275 | 250 | 200 | | |
| | 8 | 330 | 305 | 290 | 250 | 225 | 175 |
| | 10 | 340 | 315 | 295 | 260 | 235 | 185 |
| MREF | 10 | 300 | 297 | 290 | 270 | 225 | - |

**Tableau 26 - Viscosité**

| Mortier | Dosage (% d'argile) | Viscosité (s) à 5 min |
|---|---|---|
| MChit1 | 6 | 33 |
| | 8 | 30 |
| | 10 | 34 |
| MREF | 10 | 17 |

**Tableau 27 - Temps de prise**

| Mortier | Inertant (%) | Temps de prise (h/min) |
|---|---|---|
| MChit1 | 6 | 4h00 |
| | 8 | 4h00 |
| | 10 | 4h30 |
| MREF | 10 | 4h40 |

## EXEMPLE 8

On a préparé un mortier MChit2 comme cela a été décrit précédemment, mais en ajoutant le polymère Chit2 (DS de 0,59) dans l'eau de pré-mouillage dans les quantités indiquées dans les tableaux 28, 29 et 30 ci-après.

On a mesuré l'étalement, la viscosité et le temps de prise après préparation des mortiers MChit2 et MREF comme cela a été décrit précédemment. Les résultats sont rassemblés dans les tableaux 28, 29 et 30 ci-après.

**Tableau 28 - Mesure de l'étalement du mortier**

| | | Etalement (mm) | | | | |
|---|---|---|---|---|---|---|
| Mortier | Dosage (% d'argile) | à 5 min | à 15 min | à 30 min | à 60 min | à 90 min |
| MChit2 | 10 | 360 | 335 | 325 | 300 | 260 |
| MREF | 10 | 300 | 297 | 290 | 270 | 225 |

**Tableau 29 - Viscosité**

| | | Viscosité (s) | |
|---|---|---|---|
| Mortier | Dosage (% d'argile) | Viscosité (s) à 5 min | Viscosité (s) à 30 min |
| MChit2 | 10 | 32 | 48 |
| MREF | 10 | 17 | 29 |

**Tableau 30 - Temps de prise**

| Mortier | Inertant (%) | Temps de prise (h/min) |
|---|---|---|
| MChit2 | 10 | 4h30 |
| MREF | 10 | 4h40 |

## EXEMPLE 9

On a préparé ensuite un mortier Mchit3 comme cela a été décrit précédemment, mais en ajoutant le polymère Chit3 (DS de 1,35) dans l'eau de pré-mouillage dans les quantités indiquées dans les tableaux 31, 32 et 33 ci-après.

On a mesuré l'étalement, la viscosité et le temps de prise après préparation des mortiers MREF et MChit3 comme cela a été décrit précédemment. Les résultats sont rassemblés dans les tableaux 31, 32 et 33 ci-après.

**Tableau 31 - Mesure de l'étalement du mortier**

| | | Etalement (mm) | | | | |
|---|---|---|---|---|---|---|
| Mortier | Dosage (% d'argile) | à 5 min | à 15 min | à 30 min | à 60 min | à 90 min |
| MChit3 | 10 | 330 | 335 | 295 | 255 | 225 |
| MREF | 10 | 300 | 297 | 290 | 270 | 225 |

**Tableau 32 - Viscosité**

| Mortier | Dosage (% d'argile) | Viscosité (s) à 5 min | Viscosité (s) à 30 min |
|---|---|---|---|
| MChit3 | 10 | 30 | 56 |
| MREF | 10 | 17 | 29 |

**Tableau 33 - Temps de prise**

| Mortier | Inertant (%) | Temps de prise (h/min) |
|---|---|---|
| MCh it3 | 10 | 4h30 |
| MREF | 10 | 4h40 |

## EXEMPLE 10

On a préparé un polymère cationique, appelé Dext7 à partir de dextrine comme suit. A une solution de dextrine jaune C*Plus 08011 (17 g soit 106 mmol) solubilisé dans une solution aqueuse NaOH 0,8 M (132,5 mL) sous atmosphère d'azote à 45°C pendant 30 minutes, on a ajouté une solution de GTMAC (GlycidylTriMéthylAmmonium Chloride) (71,1 mL soit 371 mmol) préalablement solubilisée dans 18 mL d'eau distillé. La réaction a été laissée au total sous agitation pendant 20 heures à 45°C sous atmosphère d'azote. La solution, après avoir été ramenée à température ambiante, a été neutralisée avec une solution de HCl puis diluée avec une solution aqueuse NaCl 0,5 M jusqu'à un volume total de 1 L. Elle a ensuite été ultra-filtrée par ultrafiltration tangentielle avec une membrane MILLIPORE (seuil de coupure 1000g/mol), commercialisée par Millipore, en polyéther sulfone. L'ultrafiltration a été arrêtée lorsque la conductivité du filtrat a été stable et a atteint une valeur inférieure à 10 µS. La solution a alors été lyophilisée.

Le rendement de cette réaction est de 45 %. Le taux de greffage des groupements cationiques par dosage potentiométrique est de 0,85.

**EXEMPLE 11**

On a préparé un polymère cationique, appelé Chit4 à partir de chitosan comme suit. A une suspension de chitosan (15 g soit 87,2 mmol) dispersée dans l'eau distillée (150 mL) pendant une nuit à température ambiante, on a ajouté goutte à goutte sous agitation du GTMAC (GlycidylTriMéthylAmmonium Chloride) (165,5 mL soit 863 mmol étant donné qu'il s'agit d'une solution aqueuse à environ 30 %) en trois fois avec 2 heures d'intervalle entre chaque addition (58, 58 et 49,5 mL). La réaction a été laissée au total sous agitation pendant 10 heures à 85°C. Après refroidissement à température ambiante, le milieu réactionnel a été dilué avec de l'eau jusqu'à un volume total de 1 L. Il a ensuite été ultra-filtré par ultrafiltration tangentielle avec une membrane MILLIPORE (dont le seuil de coupure est 1000 g/mol) en polyéther sulfone. L'ultrafiltration a été arrêtée lorsque la conductivité du filtrat a été stable et a atteint une valeur inférieure à 10 $\mu$S. La solution a alors été lyophilisée. Le composé (20,250 g soit 45,4 mmol) a ainsi été isolé. Le rendement de cette réaction est de 52,1 %. Le taux de greffage des groupements cationiques par dosage potentiométrique est de 1,35.

**EXEMPLE 12 de comparaison**

On a préparé un polymère cationique, appelé Hec1 à partir d'hydroxyéthylcellulose comme suit. A une solution d'hydroxyéthylcellulose (17 g soit 31 mmol) solubilisée dans une solution aqueuse NaOH à 0,8 M (132,5 mL) sous atmosphère d'azote à 45°C pendant 30 minutes, on a ajouté une solution de GTMAC (GlycidylTriMéthylAmmonium Chloride 51 mL soit 21,8 mmol) préalablement solubilisé dans 18 mL d'eau distillé. La réaction a été laissée au total sous agitation pendant 20 heures à 45°C sous atmosphère d'azote. La solution, après avoir été ramenée à température ambiante, a été neutralisée avec une solution de HCl puis diluée avec une solution aqueuse NaCl 0,5 M jusqu'à un volume total de 1 L. Elle a ensuite été ultra-filtrée par ultrafiltration tangentielle avec une membrane MILLIPORE (seuil de coupure 1000 g/mol) en polyéthersulfone. L'ultrafiltration a été arrêtée lorsque la conductivité du filtrat a été stable et a atteint une valeur inférieure à 10 $\mu$S. La solution a alors été lyophilisée.

Le rendement de cette réaction est de 46 %. Le taux de greffage des groupements cationiques par dosage potentiométrique est de 1,1.

On a préparé un mortier MHec1 comme cela a été décrit précédemment, mais en ajoutant 10 % en masse d'extrait sec de polymère Hec1 après l'eau de pré-mouillage.

On a mesuré l'étalement, la viscosité et le temps de prise après préparation des mortiers MREF et MHec1 comme cela a été décrit précédemment. Les résultats sont rassemblés dans les tableaux 34, 35 et 36 ci-après.

**Tableau 34 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MHec1 | 10 | 340 | 300 | 275 | 235 | 200 | - |
| MREF | 10 | 300 | 297 | 290 | 270 | 225 | - |

**Tableau 35 - Viscosité**

| Mortier | Dosage (% d'argile) | Viscosité (s) à 5 min |
|---|---|---|
| MHec1 | 10 | 45 |
| MREF | 10 | 17 |

**Tableau 36 - Temps de prise**

| | Dosage (% d'argile) | Temps de prise (h/min) |
|---|---|---|
| MHec1 | 10 | 4h10 |
| MREF | 10 | 4h40 |

L'utilisation du polymère cationique Hec1 conduit à des viscosités initiales élevées. En outre, l'étalement à 90 minutes est insuffisant.

**EXEMPLE 13**

On a préparé un polymère cationique selon un procédé mettant en oeuvre une réaction de quaternisation. On a placé 40 g de chitosan dans un erlenmeyer de 2 L et on a ajouté alors 120 mL d'acide formique puis 160 mL d'une solution aqueuse de formaldéhyde à 30 % et enfin 720 mL d'eau distillée portant le volume total du milieu réactionnel à 1 L. La solution a ensuite été chauffée à 70°C sous agitation magnétique pendant 5 jours. La solution a ensuite été concentrée sous vide et le pH est porté à 12 à l'aide d'une solution de NaOH (1 M). A ce pH, un gel s'est formé. Il a été filtré sur un fritté 3 et lavé abondamment à l'eau distillée. Le diméthylchitosan (DMC) a ensuite été solubilisé dans l'eau à pH égal à 4 (ajusté à l'aide d'une solution HCl à 1 M), filtré sur fritté puis purifié par ultrafiltration (système Pall Minimate TFF avec membrane Oméga 5000 Dalton). Le produit a finalement été lyophilisé. Le DMC a ensuite été quaternisé à l'aide d'iodométhane. Pour éviter la O-méthylation, la réaction a été effectuée dans un mélange $H_2O$/DMF. Plus précisément, on a placé 20 g de DMC dans un erlenmeyer de 2 L puis 500 mL d'un mélange $H_2O$/DMF (50/50) ont été ajoutés. L'ensemble a été placé sous agitation magnétique. On a ajouté alors une solution de NaOH (4 M) jusqu'à formation d'un gel puis 12 mL de $CH_3I$. Le milieu réactionnel a alors été agité vigoureusement pendant 48 h à température ambiante. A l'issue de la réaction, il a été concentré sous vide et le triméthylchitosan (TMC) a été précipité par trois volumes d'éthanol froid puis filtré sur fritté. Solubilisé dans l'eau, il a été précipité une seconde fois à l'éthanol. Le produit obtenu a alors été solubilisé dans une solution de NaCl à 5 % pour procéder à l'échange d'ion puis a été précipité à nouveau par 3 volumes d'éthanol. Le TMC a finalement été purifié par ultrafiltration (système Pall Minimate TFF avec membrane Oméga 5000 Dalton) puis lyophilisé. L'analyse RMN$^1$H a indiqué un taux de quaternisation de 22 %.

**EXEMPLE 14**

On a préparé un polymère cationique selon un procédé mettant en oeuvre des réactions d'oxydoréduction et d'amination réductrice.

On a dissous 15 g de cellulose (92,5 mol) dans 750 mL d'eau distillée. On y a ajouté 39,59 g de périodate de sodium (185 mmol) dans 300 mL d'eau distillée et 50 mL de propanol. Le mélange a été mis sous agitation magnétique pendant 100 h à l'abri de la lumière. On a filtré ensuite sur Büchner, le résidu a été lavé à l'eau distillée. Le dernier lavage a été réalisé avec de l'éthanol pour faciliter le séchage de la cellulose, après filtration, la cellulose a été séchée à l'étuve. On obtient 12 g de cellulose oxydée.

On a mis 10 g de cellulose oxydée en suspension dans l'eau. On a ajouté un excès de borohydrure de sodium et on a laissé la réaction se poursuivre pendant 48 h à température ambiante. La cellulose réduite étant soluble dans l'eau, on l'a purifié par dialyse et évapore à sec. On a obtienu 8,15 g de cellulose réduite soit 80 % de rendement.

On a dissous 20 g de carboxyméthyl cellulose (CMC) dans 700 mL d'eau distillée. On a ajouté ensuite 200 mL d'une solution aqueuse contenant 30,06 g de périodate de sodium (140 mmol) et 50 mL de propanol. Puis on a laissé sous agitation magnétique pendant 25 h. Après arrêt de la réaction, on a concentré la solution et on a filtré sous vide. On a laissé le résidu sécher à température ambiante. On a obtienu 15 g de CMC oxydé.

On a dissous 10 g de CMC oxydée dans 400 mL d'eau distillée sous agitation magnétique. Ensuite, on a ajouté une solution aqueuse contenant 5,04 g de cyanoborohydrure de sodium et 3,6 mL de méthylamine. Le mélange a été laissé sous agitation magnétique pendant 24 h. On a concentré et filtré sous vide. On a lavé avec du dimétylacétamide et filtré encore une fois. Le rendement de cette réaction est de 67,4 %.

On a dissous 10 g de CMC aminée (4 mmol) dans un mélange de 300 mL de DMSO (DiMethyl Sulfoxide) et 300 mL d'eau. On y a ajouté six équivalents d'iodure de méthyle (24 mmol) et on a laissé sous agitation magnétique pendant 4 jours. Après arrêt de la réaction, on a filtré sur Büchner, lavé avec éthanol et séché. On a obtienu 8 g de produit, soit un rendement de 80 %. On a formé un groupe ammonium quaternaire du CMC aminé.

**EXEMPLE 15**

On a préparé un polymère cationique Dext8 à partir de dextrine jaune TACKIDEX ® C172Y comme suit. De la dextrine jaune (50,3 g à 96 % d'extrait sec soit 0,3 mole d'AGU) et une quantité de soude 15 % (79,5g soit 0,3 moles) ont été introduites dans un réacteur double enveloppe de 1 L, à température ambiante et sous agitation mécanique durant 15 heures. Le milieu a été chauffé à 45°C. On a introduit alors progressivement une quantité $Q_{QUAT188}$ du QUAT188 suivi par l'ajout progressif de soude à 15%, ajout réalisé en 5 heures. Cet ajout de soude terminé, le mélange réactionnel a été refroidi avant d'être neutralisé avec de l'acide chlorhydrique 37 %.

Le produit obtenu a été ultra filtré sur membrane en polyéthersulfone de 5 kDa pour purification. N'ont été conservées que les molécules dont la masse moléculaire est supérieure à 5 kDa. Le rendement de cette réaction est

de 75 %. Le taux de greffage des groupements cationiques par dosage du taux d'azote est de 0,8.

On a préparé un mortier MDext8 comme cela a été décrit précédemment, mais en ajoutant 10 % en masse d'extrait sec de polymère Dext8 après l'eau de pré-mouillage. On a mesuré l'étalement, la viscosité et le temps de prise après préparation des mortiers MREF et MDext8 comme cela a été décrit précédemment. Les résultats sont rassemblés dans les tableaux 34, 35 et 36 ci-après.

**Tableau 37 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| M Dext8 | 10 | 350 | 350 | 350 | 325 | 305 | 265- |
| MREF | 10 | 300 | 297 | 290 | 270 | 225 | - |

**Tableau 38 - Viscosité**

| Mortier | Dosage (% d'argile) | Viscosité (s) à 5 min |
|---|---|---|
| M Dext8 | 10 | 16 |
| MREF | 10 | 17 |

**Tableau 39 - Temps de prise**

| | Dosage (% d'argile) | Temps de prise (h/min) |
|---|---|---|
| M Dext8 | 10 | 5h15 |
| MREF | 10 | 4h40 |

L'utilisation du polymère cationique Dext8 conduit à des viscosités initiales faibles et un étalement élevé jusqu'à 120 minutes.

**EXEMPLE 16**

On a utilisé comme polymère cationique de l'amidon commercialisé sous l'appellation Hi Cat 985 580T624 par la société Roquette.

On a préparé une solution d'amidon cationique à partir du polymère cationique Am1 et d'eau. L'extrait sec mesuré est de 9%.

On a préparé un mortier MAm1 comme cela a été décrit précédemment, mais en ajoutant 10 % en masse d'extrait sec d'amidon cationique en solution avec l'eau de pré-mouillage.

On a mesuré l'étalement, la viscosité et le temps de prise après préparation des mortiers MREF et MAm1 comme cela a été décrit précédemment. Les résultats sont rassemblés dans les tableaux 40 et 41 ci-après.

**Tableau 40 - Mesure de l'étalement du mortier**

| | | Etalement (mm) | | | | | |
|---|---|---|---|---|---|---|---|
| Mortier | Dosage (% d'argile) | à 5 min | à 15 min | à 30 min | à 60 min | à 90 min | à 120 min |
| MAm1 | 10 | 100 | - | - | - | - | - |
| MREF | 10 | 300 | 297 | 290 | 270 | 225 | - |

**Tableau 41 - Temps de prise**

| | Dosage (% d'argile) | Temps de prise (h/min) |
|---|---|---|
| MAm1 | 10 | 3h30 |

(suite)

| | Dosage (% d'argile) | Temps de prise (h/min) |
|---|---|---|
| MREF | 10 | 4h40 |

L'utilisation de l'amidon cationique Am1 conduit à un étalement trop faible pour que le mortier soit manipulable. Ce polymère cationique a un très haut poids moléculaire (supérieur à 1000 000 g/mol) et n'est pas soluble dans l'eau à température du mortier.

## Revendications

1. Procédé d'inertage d'impuretés dans des granulats destinés à la préparation de compositions hydrauliques ou hydrocarbonées, comprenant une étape consistant à ajouter à la composition ou à l'un de ses constituants un polymère cationique correspondant à au moins un dérivé d'un polymère naturel ou d'origine naturelle choisi parmi le groupe comprenant la dextrine et le chitosan.

2. Procédé selon la revendication 1, dans lequel le polymère cationique est la dextrine jaune cationique.

3. Procédé selon l'une quelconque des revendications 1 à 2, dans lequel le polymère cationique est un polysaccharide substitué par des groupes amine quaternaire.

4. Procédé selon la revendication 3, dans lequel les groupes amine quaternaire sont dérivés d'un composé amine quaternaire selon l'une des formules (1) ou (2) :

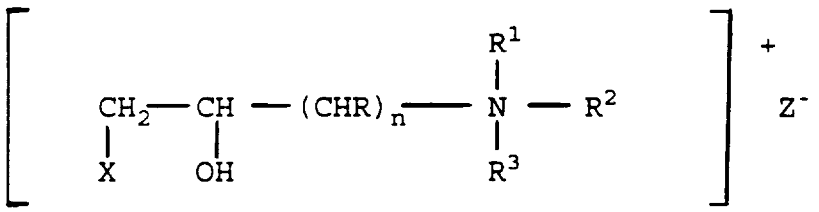

(1)

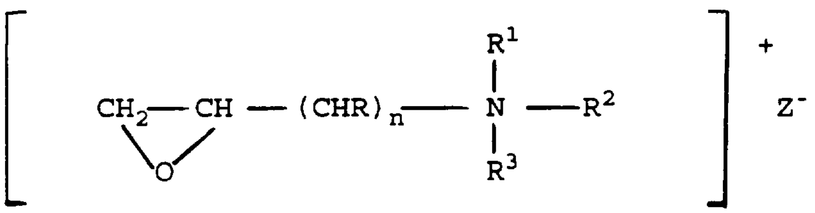

(2)

où n est un entier de 1 à 16 ;
X est un halogène ;
Z est un anion inorganique ou organique ;
R, $R^1$, $R^2$ et $R^3$, qui peuvent être identiques ou différents, sont chacun l'hydrogène ou un radical organique, $R^2$ pouvant en outre être un groupe selon la formule (3) ou (4) :

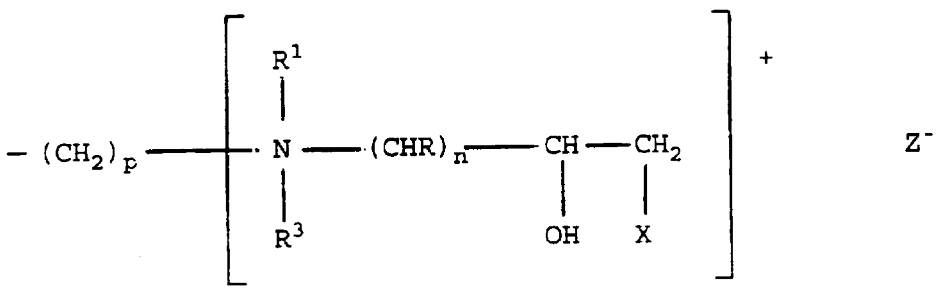

(3)

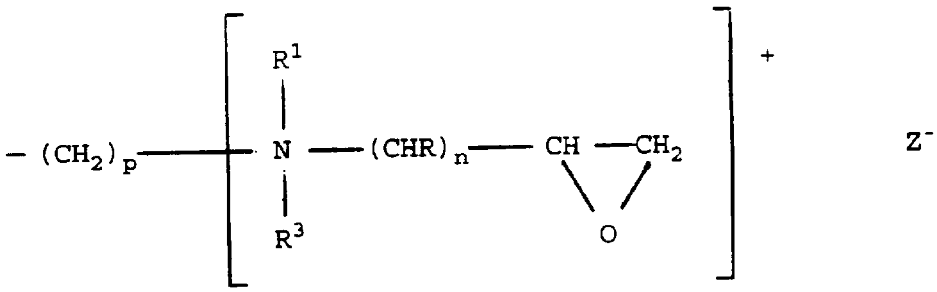

(4)

où p est un entier compris de 2 à 10 et n, R, $R^1$, $R^2$, $R^3$, X et Z sont tels que définis précédemment.

**5.** Procédé selon la revendication 4, dans lequel R, $R^1$, $R^2$ et $R^3$ sont chacun l'hydrogène ou un groupe alkyle, hydroxyalkyle, alkényle ou aryle comprenant jusqu'à 10 atomes de carbone.

**6.** Procédé selon la revendication 4, dans lequel R, $R^1$, $R^2$ et $R^3$ sont chacun l'hydrogène.

**7.** Procédé selon la revendication 5 ou 6, dans lequel le composé amine quaternaire est choisi parmi le groupe comprenant :

le chlorure de 2,3-époxypropyl-N,N,N-triméthylammonium ;
le chlorure de 3-chloro-2-hydroxypropyl-N,N,N-triméthylammonium ;
le chlorure de 3-chloro-2-hydroxypropyl-N,N,N-diméthylethanolammonium ; et
le dichlorure de 1, 3-bis- (3-chloro-2-hydroxypropyl-N,N-diméthylammonium) N-propane.

**8.** Procédé selon la revendication 4, dans lequel le composé amine quaternaire est choisi parmi le groupe comprenant la bétaïne, le chlorure de bétaïnyle et le chlorure de bétaïne.

**9.** Procédé selon l'une quelconque des revendications 1 à 8, dans lequel le polymère cationique a un degré de substitution compris de 0,2 à 2,5.

**10.** Procédé selon l'une quelconque des revendications 1 à 9, dans lequel la composition hydraulique est un béton ou un mortier.

**11.** Procédé selon l'une quelconque des revendications 1 à 10, dans lequel le polymère cationique est ajouté par pulvérisation d'une solution aqueuse.

**12.** Procédé selon l'une quelconque des revendications 1 à 11, dans lequel le polymère est ajouté en carrière ou en centrale à béton.

**Patentansprüche**

**1.** Verfahren zur Inertisierung von Unreinheiten in Granulaten, die für die Herstellung von wassergebundenen oder bituminösen Zusammensetzungen bestimmt sind, umfassend einen Schritt, der darin besteht, der Zusammensetzung oder einem ihrer Bestandteile ein kationisches Polymer zuzusetzen, das mindestens einem Derivat eines natürlichen Polymers oder Polymers natürlichen Ursprungs entspricht, ausgewählt aus der Gruppe, die das Dextrin oder das Chitosan umfasst.

**2.** Verfahren nach Anspruch 1, wobei das kationische Polymer das kationische gelbe Dextin ist.

**3.** Verfahren nach einem der Ansprüche 1 bis 2, wobei das kationische Polymer ein durch quaternäre Amingruppen substituiertes Polysaccharid ist.

**4.** Verfahren nach Anspruch 3, wobei die quaternären Amingruppen Derivate einer quaternären Aminverbindung gemäß einer der Formeln (1) oder (2) sind:

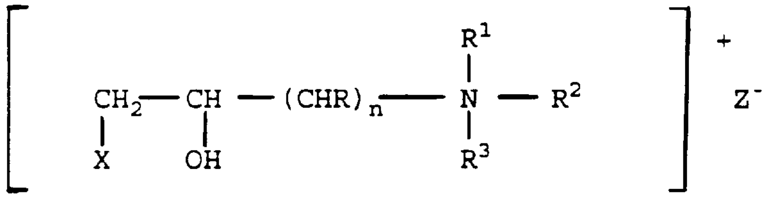

(1)

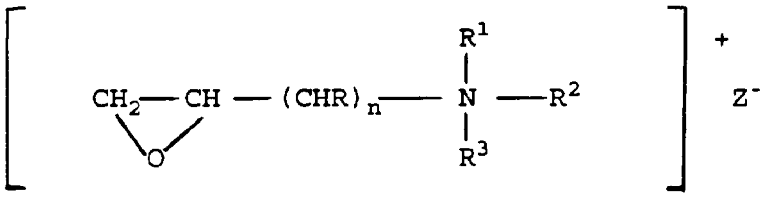

(2)

wobei n eine Ganzzahl von 1 bis 16 ist,
X ein Halogen ist,
Z ein anorganisches oder organisches Anion ist,
R, $R^1$, $R^2$ und $R^3$, die identisch oder unterschiedlich sein können, jeweils Wasserstoff oder ein organisches Radikal sind, wobei $R^2$ ferner eine Gruppe gemäß der Formel (3) oder (4) sein kann:

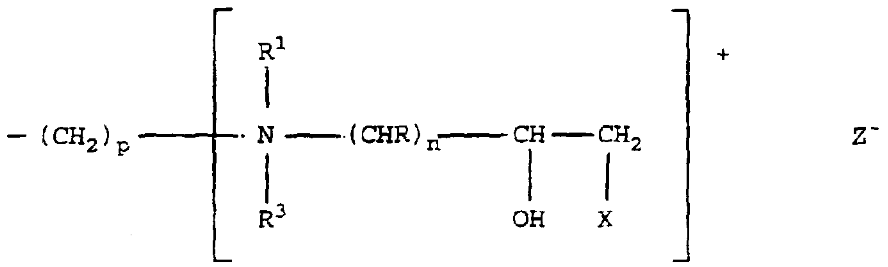

(3)

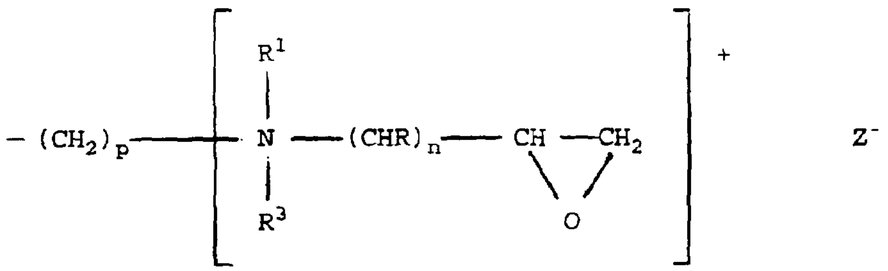

(4)

wobei p eine Ganzzahl von 2 bis 10 inklusive ist und n, R, $R^1$, $R^2$, $R^3$, X und Z so wie zuvor definiert sind.

**5.** Verfahren nach Anspruch 4, wobei R, $R^1$, $R^2$ und $R^3$ jeweils Wasserstoff oder eine Alkyl-, Hydroxyalkyl-, Alkenyl- oder Arylgruppe sind, umfassend bis zu 10 Kohlenstoffatomen.

**6.** Verfahren nach Anspruch 4, wobei R, $R^1$, $R^2$ und $R^3$ jeweils Wasserstoff sind.

**7.** Verfahren nach Anspruch 5 oder 6, wobei die quaternäre Aminverbindung aus der Gruppe ausgewählt ist, die umfasst:

das Chlorid von 2,3-Epoxypropyl-N,N,N-trimethylammonium,
das Chlorid von 3-Chlor-2-hydroxypropyl-N,N,N-trimethylammonium,
das Chlorid von 3-Chlor-2-hydroxypropyl-N,N,N-dimethylethanolammonium und
das Dichlorid von 1,3-bis-(3-chlor-2-hydroxypropyl-N,N-dimethylammonium)-N-propan.

**8.** Verfahren nach Anspruch 4, wobei die quaternäre Aminverbindung aus der Gruppe ausgewählt ist, die Betain,

Betainylchlorid und Betainchlorid umfasst.

**9.** Verfahren nach einem der Ansprüche 1 bis 8, wobei das kationische Polymer einen Substitutionsgrad von 0,2 bis 2,5 inklusive hat.

**10.** Verfahren nach einem der Ansprüche 1 bis 9, wobei die wassergebundene Zusammensetzung ein Beton oder ein Mörtel ist.

**11.** Verfahren nach einem der Ansprüche 1 bis 10, wobei das kationische Polymer durch Zerstäuben einer wässrigen Lösung hinzugefügt wird.

**12.** Verfahren nach einem der Ansprüche 1 bis 11, wobei das Polymer im Steinbruch oder im Betonwerk hinzugefügt wird.

## Claims

**1.** An inerting process for impurities in aggregates intended for preparation of a hydraulic or hydrocarbon compositions, comprising the step of adding a cationic polymer corresponding to at least one derivative of a natural polymer or a polymer of natural origin selected from the group comprising dextrin and chitosan to the composition or to one of its constituents.

**2.** The process according to claim 1, wherein the cationic polymer is yellow cationic dextrin.

**3.** The process according to any one of claims 1 to 2, wherein the cationic polymer is a polysaccharide substituted by quaternary amine groups.

**4.** The process according to claim 3, wherein the quaternary amine groups are derived from a quaternary amine compound according to one of formulae (1) or (2):

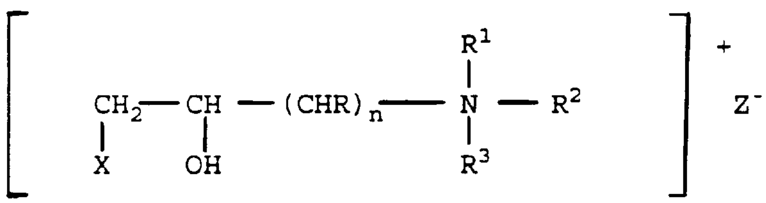

(1)

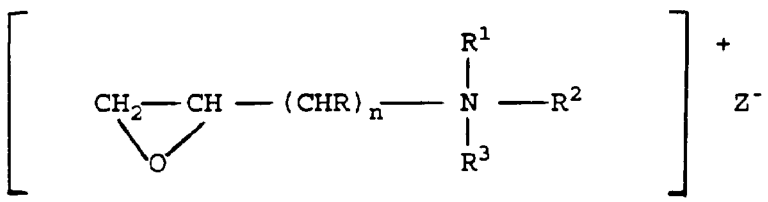

(2)

wherein n is an integer from 1 to 16;
X is a halogen;
Z is an inorganic or organic anion;
R, $R^1$, $R^2$ and $R^3$, which may be identical or different, are each hydrogen or an organic radical, $R^2$ furthermore capable of being a group according to formula (3) or (4):

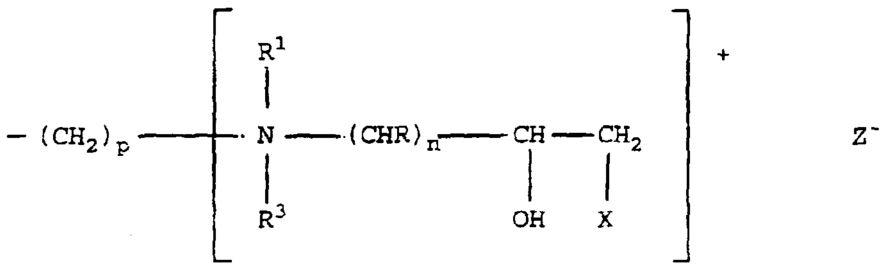

(3)

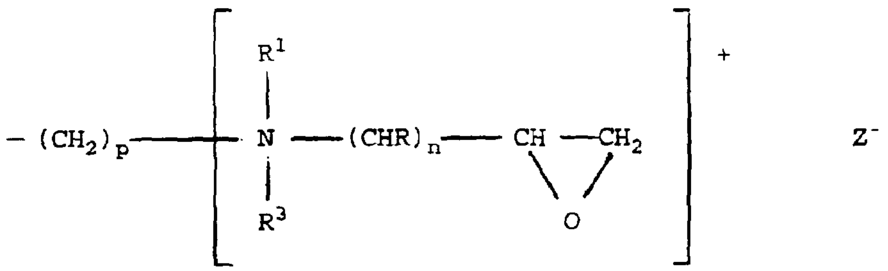

(4)

wherein p is an integer from 2 to 10 and n, R, $R^1$, $R^2$, $R^3$, X and Z are as previously defined.

5. The process according to claim 4, wherein R, $R^1$, $R^2$ and $R^3$ are each hydrogen or an alkyl, hydroxyalkyl, alkenyl or aryl group comprising up to 10 carbon atoms.

6. The process according to claim 4, wherein R, $R^1$, $R^2$ and $R^3$ are each hydrogen.

7. The process according to claim 5 or 6, wherein the quaternary amine compound is selected from the group comprising:

2,3-epoxypropyl-N,N,N-trimethylammonium chloride;
3-chloro-2-hydroxypropyl-N,N,N-trimethylammonium chloride;
3-chloro-2-hydroxypropyl-N,N,N-dimethylethanolammonium chloride; and
1,3-bis-(3-chloro-2-hydroxypropyl-N,N-dimethylammonium)-N-propane dichloride.

8. The process according to claim 4, wherein the quaternary amine compound is selected from the group comprising betaine, betainyl chloride and betaine chloride.

9. The process according to any one of claims 1 to 8, wherein the cationic polymer has a degree of substitution of from 0.2 to 2.5.

10. The process according to any one of claims 1 to 9, wherein the hydraulic composition is a concrete or a mortar.

11. The process according to any one of claims 1 to 10, wherein the cationic polymer is added by spraying an aqueous solution.

12. The process according to any one of claims 1 to 11, wherein the polymer is added at the quarry or at the concrete mixing plant.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2006032785 A